(19) Europäisches Patentamt
European Patent Office
Office européen des brevets

(11) **EP 4 642 103 A1**

(12) **EUROPEAN PATENT APPLICATION**
published in accordance with Art. 153(4) EPC

(43) Date of publication:
**29.10.2025 Bulletin 2025/44**

(21) Application number: **23905777.1**

(22) Date of filing: **13.12.2023**

(51) International Patent Classification (IPC):
***H04W 52/02*** (2009.01)

(52) Cooperative Patent Classification (CPC):
**H04W 52/02;** Y02D 30/70

(86) International application number:
**PCT/CN2023/138376**

(87) International publication number:
**WO 2024/131611 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 CN 202211664836**

(71) Applicant: **SHANGHAI LANGBO
COMMUNICATION TECHNOLOGY
COMPANY LIMITED
Shanghai 200240 (CN)**

(72) Inventors:
• **LIU, Zheng
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD USED FOR NODE IN WIRELESS COMMUNICATION, AND APPARATUS**

(57) Disclosed in the present application are a method used for a node in wireless communication, and an apparatus. The method comprises: a node receives a first information block and monitors a target wake-up signal, the first information block being used for determining at least one configuration parameter value of the target wake-up signal; and the node determines whether to monitor a first signaling and determines whether to monitor a second signaling, wherein a monitor of the target wake-up signal belongs to a first device group; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry an instruction for the first device group, the monitor of the target wake-up signal abandons monitoring the second signaling. The present application reduces the false alarm probability.

FIG. 1

## Description

## Technical Field

The present application relates to a transmission method and apparatus in a wireless communication system, and particularly relates to a low-power transmission scheme and apparatus in wireless communication.

## Background Art

In the future, the application scenarios of wireless communication systems will become more and more diversified, and different application scenarios will put different performance requirements on the system. In order to meet the different performance needs of various application scenarios, it was decided to study the new radio (NR) technology (or 5G) at the 3GPP (3rd Generation Partner Project) RAN (Radio Access Network) #72 plenary meeting, the 3GPP RAN #75 plenary meeting approved the WI (Work Item) of NR (New Radio) technology, and the standardization of NR began.

In the new radio technology, power consumption is an important indicator to measure the technical performance. In order to adapt to various application scenarios and meet different needs, 3GPP has been evolving the technology to reduce the power consumption.

## Summary of the Invention

Among various technologies for reducing power consumption, it is considered to be an effective method to wake up a receiver of user equipment (UE) or network equipment (gNB/eNB) in advance through a wake-up signal. For the demand to reduce the power consumption in an NR system, the present application discloses a solution. It should be noted that in the description of the present application, reducing the power consumption is only used as one typical application scenario or example; The wake-up signal in the present application is also applicable to other scenarios facing similar problems (such as other scenarios requiring pre-wakeup, comprising but not limited to capacity enhancement systems, near field communication systems, unlicensed band communication, IoT (Internet of Things), URLLC (Ultra-Reliable Low-Latency Communication) networks, Vehicle-to-Everything, etc.), where similar technical effects can also be achieved. In addition, using a unified solution in different scenarios (comprising but not limited to multi-carrier scenarios) can also help reduce hardware complexity and costs. In case of no conflict, the embodiments and features in the embodiments in the first node device of the present application may be applied to the second node device, and vice versa. In particular, the explanation of terminology, nouns, functions, and variables in the present application (if not specified) can refer to the definitions in the TS36 series, TS38 series, and TS37 series of the specification protocol of 3GPP.

The present application discloses a method used in a first node for wireless communication, comprising:

receiving a first information block and monitoring a target wake-up signal, wherein the first information block is used to determine at least 1 configuration parameter value of the target wake-up signal; and

determining whether to monitor a first signaling and determining whether to monitor a second signaling,

wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling.

As one embodiment, whether to monitor the first signaling is determined through the first information block or the target wake-up signal, thereby supporting different paging wake-up or instruction mechanisms and enhancing configuration flexibility.

As one embodiment, a network dynamically adjusts the wake-up or instruction mechanisms as needed, thereby optimizing power consumption.

According to one aspect of the present application, the above method is characterized in that the target wake-up signal is not detected; and the monitor of the target wake-up signal monitors the first signaling and the first signaling is used to determine whether to monitor the second signaling, or the monitor of the target wake-up signal abandons monitoring the second signaling.

According to one aspect of the present application, the above method is characterized in that the first signaling is associated with G1 device groups, and the G1 is a positive integer greater than 1; a second device group is one of the G1 device groups, and the monitor of the target wake-up signal belongs to the second device group; and an instruction value of the second device group carried by the first signaling is used to determine whether to monitor the second signaling.

According to one aspect of the present application, the above method is characterized in that the first information block is used to determine X1 configuration sets, any one of the X1 configuration sets comprises at least 1 configuration parameter value, and the X1 is a positive integer greater than 1; a target configuration set is one of the X1 configuration sets, and the target configuration set comprises at least 1 configuration parameter value of the target wake-up signal; and an identity of the first device group is used to determine the target configuration set from the X1 configuration sets.

As one embodiment, the target configuration set is determined through an identity of the first device group, thereby supporting different types of wake-up signal receivers and enhancing implementation flexibility.

As one embodiment, wake-up signals with different configurations are supported, thereby optimizing the design of the wake-up signals.

According to one aspect of the present application, the above method is characterized by comprising:

transmitting a second information block,
wherein the second information block is used to instruct at least 1 band, and the monitor of the target wake-up signal supports a reception of a wake-up signal on each band instructed by the second information block.

According to one aspect of the present application, the above method is characterized in that the first device group is one of X2 device groups, X2 identities correspond to the X2 device groups respectively, any one of the X2 device groups includes at least 1 user equipment, and the X2 is a positive integer greater than 1; and a first identity and a second identity are two different identities in the X2 identities, respectively, one piece of user equipment included in a device group corresponding to the first identity in the X2 device groups is assigned the first identity, and one piece of user equipment included in a device group corresponding to the second identity in the X2 device groups is not assigned an identity or is assigned the second identity.

According to one aspect of the present application, the above method is characterized in that the first information block is used to determine a time domain position offset between the first signaling and the second signaling, and the first information block is used to determine a time domain position offset between the target wake-up signal and the second signaling; and a time domain position relationship between the target wake-up signal and the first signaling is used to determine whether to monitor the first signaling, and an identity of the monitor of the target wake-up signal is used to determine a time domain position of the second signaling.

The present application discloses a method used in a second node for wireless communication, comprising:

sending a first information block and sending a target wake-up signal, wherein the first information block is used to determine at least 1 configuration parameter value of the target wake-up signal; and
sending a first signaling and sending a second signaling,
wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether the first signaling is monitored, and the first signaling is used to determine whether the second signaling is monitored; and when the target wake-up signal is detected and the target wake-up signal does not carry the instruction for the first device group, the monitor of the target wake-up signal abandons monitoring the second signaling.

According to one aspect of the present application, the above method is characterized in that the target wake-up signal is not detected; and the monitor of the target wake-up signal monitors the first signaling and the first signaling is used to determine whether to monitor the second signaling, or the monitor of the target wake-up signal abandons monitoring the second signaling.

According to one aspect of the present application, the above method is characterized in that the first signaling is associated with G1 device groups, and the G1 is a positive integer greater than 1; a second device group is one of the G1 device groups, and the monitor of the target wake-up signal belongs to the second device group; and an instruction value of the second device group carried by the first signaling is used to determine whether to monitor the second signaling.

According to one aspect of the present application, the above method is characterized in that the first information block is used to determine X1 configuration sets, any one of the X1 configuration sets comprises at least 1 configuration parameter value, and the X1 is a positive integer greater than 1; a target configuration set is one of the X1 configuration sets, and the target configuration set comprises at least 1 configuration parameter value of the target wake-up signal; and an identity of the first device group is used to determine the target configuration set from the X1 configuration sets.

According to one aspect of the present application, the above method is characterized by comprising:

receiving a second information block,
wherein the second information block is used to instruct at least 1 band, and the monitor of the target wake-up signal supports a reception of a wake-up signal on each band instructed by the second information block.

According to one aspect of the present application, the above method is characterized in that the first device group is one of X2 device groups, X2 identities correspond to the X2 device groups respectively, any one of the X2 device groups includes at least 1 user equipment, and the X2 is a positive integer greater than 1; and a first identity and a second identity are two different identities in the X2 identities, respectively, one piece of user equipment included in a device group corresponding to the first identity in the X2 device groups is assigned the first identity, and one piece of user equipment included in a device group corresponding to the second identity in the X2 device groups is not assigned an identity or is assigned the second identity.

According to one aspect of the present application, the above method is characterized in that the first information block is used to determine a time domain position offset between the first signaling and the second signaling, and the first information block is used to determine a time domain position offset between the target wake-up signal and the second signaling; and a time domain position relationship between the target wake-up signal and the first signaling is used to determine whether to monitor the first signaling, and an identity of the monitor of the target wake-up signal is used to determine a time domain position of the second signaling.

The present application discloses a first node device used in wireless communication, comprising:

a first transceiver for receiving a first information block and monitoring a target wake-up signal, wherein the first information block is used to determine at least 1 configuration parameter value of the target wake-up signal; and
a first receiver for determining whether to monitor a first signaling and determining whether to monitor a second signaling,
wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling.

The present application discloses a second node device used in wireless communication, comprising:

a second transceiver for sending a first information block and sending a target wake-up signal, wherein the first information block is used to determine at least 1 configuration parameter value of the target wake-up signal; and
a first transmitter for sending a first signaling and sending a second signaling,
wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether the first signaling is monitored, and the first signaling is used to determine whether the second signaling is monitored; and when the target wake-up signal is detected and the target wake-up signal does not carry the instruction for the first device group, the monitor of the target wake-up signal abandons monitoring the second signaling.

## Brief Description of the Drawings

Other features, objects and advantages of the present application will become more apparent by reading the detailed description of non-limiting embodiments with reference to the following drawings:

FIG. 1 shows a flowchart of a first information block, a target wake-up signal, a first signaling, and a second signaling according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first node device and a second node device according to one embodiment of the present application;
FIG. 5 shows a flowchart of wireless signal transmission according to one embodiment of the present application;
FIG. 6 shows another flowchart of wireless signal transmission according to one embodiment of the present application;

FIG. 7 shows a schematic diagram of a target wake-up signal according to one embodiment of the present application;

FIG. 8 shows a schematic diagram of G1 device groups according to one embodiment of the present application;

FIG. 9 shows a schematic diagram of a target configuration set according to one embodiment of the present application;

FIG. 10 shows a schematic diagram of a first identity and a second identity according to one embodiment of the present application;

FIG. 11 shows a schematic diagram of relationships among a target wake-up signal, first signaling, and second signaling according to one embodiment of the present application;

FIG. 12 shows a structural block diagram of a processing device in a first node device according to one embodiment of the present application; and

FIG. 13 shows a structural block diagram of a processing device in a second node device according to one embodiment of the present application.

## Detailed Description of Embodiments

The technical solution of the present application will be further described in detail below in conjunction with the accompanying drawings. It should be noted that the embodiments and features in the embodiments in the present application can be arbitrarily combined with each other in case of no conflict.

### Embodiment 1

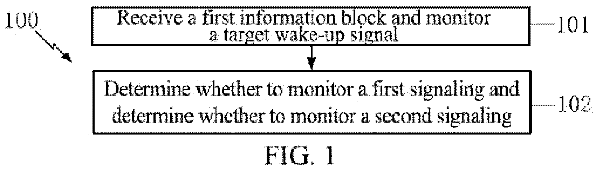

Embodiment 1 illustrates a flowchart 100 of a first information block, a target wake-up signal, a first signaling, and a second signaling according to one embodiment of the present application, as shown in FIG. 1. In FIG. 1, each block represents one step. It should be specifically emphasized that sequences of blocks in the figure do not limit a temporal precedence relationship of the represented steps.

In Embodiment 1, a first node device in the present application receives the first information block and monitors the target wake-up signal in step 101, and the first information block is used to determine at least 1 configuration parameter value of the target wake-up signal; and the first node device in the present application determines whether to monitor the first signaling and whether to monitor the second signaling in step 102, wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling.

As one embodiment, the first information block is transmitted through an air interface or a wireless interface.

As one embodiment, the first information block comprises all or part of one higher layer signaling or one physical layer signaling.

As one embodiment, the first information block comprises all or part of one RRC (Radio Resource Control) layer signaling, or the first information block comprises all or part of one MAC (Medium Access Control) layer signaling.

As one embodiment, the first information block comprises all or part of one SIB (System Information Block).

As one embodiment, the first information block comprises all or part of one SIB1.

As one embodiment, the first information block is specific to user equipment (UE-specific), or the first information block is specific to cells (cell-specific).

As one embodiment, the first information block is configured per carrier, or the first information block is configured per BWP (bandwidth part), or the first information block is configured per band or per FR (frequency range).

As one embodiment, the first information block comprises all or part of fields of a DCI (Downlink Control Information) format.

As one embodiment, the first information block comprises all or part of IE (Information Element) "PCCH-Config"; or the first information block comprises all or part of IE "DownlinkConfigCommonSIB"; or the first information block comprises all or part of IE "WUS-Config-r19"; or the first information block comprises all or part of IE "LPWUS-Config-r19"; or the first information block comprises all or part of IE "WUS-Config"; or the first information block comprises all or part of IE "LPWUS-Config".

As one embodiment, the first information block comprises all or part of paging configuration information.

As one embodiment, the first information block comprises all or part of downlink common configuration information.

As one embodiment, the first information block comprises all or part of wake-up signal configuration information.

As one embodiment, a technical feature "the first information block is used to determine at least 1 configuration parameter value of the target wake-up signal" comprises the following meaning: the first information block is used by the first node device in the present application to determine the at least 1 configuration parameter value of the target wake-up signal.

As one embodiment, a technical feature "the first information block is used to determine at least 1 configuration parameter value of the target wake-up signal" includes the following meaning: all or part of the first information block is used to explicitly or implicitly instruct the at least 1 configuration parameter value of the target wake-up signal.

As one embodiment, a technical feature "the first information block is used to determine at least 1 configuration parameter value of the target wake-up signal" includes the following meaning: all or part of the first information block is used to explicitly or implicitly instruct all or part of the configuration parameter values of the target wake-up signal.

As one embodiment, a technical feature "the first information block is used to determine at least 1 configuration parameter value of the target wake-up signal" includes the following meaning: all or part of the first information block is used to explicitly or implicitly instruct values of part of configuration parameters of the target wake-up signal, and the at least 1 configuration parameter value of the target wake-up signal is a default configuration set.

As one embodiment, a technical feature "the first information block is used to determine at least 1 configuration parameter value of the target wake-up signal" comprises the following meaning: the first information block is used to determine at least 1 configuration set of the X1 configuration sets in the present application.

As one embodiment, a technical feature "the first information block is used to determine at least 1 configuration parameter value of the target wake-up signal" comprises the following meaning: the first information block is used to determine a set of configuration parameter values comprising the at least 1 configuration parameter value of the target wake-up signal.

As one embodiment, the target wake-up signal is an LP-WUS (Low Power Wake Up Signal).

As one embodiment, the target wake-up signal is a square wave signal.

As one embodiment, the target wake-up signal is a frequency modulation signal.

As one embodiment, the target wake-up signal is a signal using OOK (On/Off Keying).

As one embodiment, the target wake-up signal is a signal using FSK (Frequency Shift Keying).

As one embodiment, the target wake-up signal is a signal using OOK and a constant envelop sequence.

As one embodiment, the target wake-up signal is a signal using FSK and a constant envelop sequence.

As one embodiment, the target wake-up signal is a signal for waking up a baseband processing function of a receiver.

As one embodiment, the target wake-up signal is a signal for waking up a complete baseband processing function of a receiver.

As one embodiment, the target wake-up signal is a signal for waking up the monitoring or reception of a PDCCH (Physical Downlink Control Channel).

As one embodiment, the target wake-up signal is a baseband signal or a radio frequency signal.

As one embodiment, the target wake-up signal is generated through OFDM.

As one embodiment, the target wake-up signal is used to reduce power consumption.

As one embodiment, the target wake-up signal is used in an RRC (Radio Resource Control) idle state or an RRC inactive state.

As one embodiment, the target wake-up signal can be used in an RRC (Radio Resource Control) idle state, an RRC inactive state, and an RRC connected state.

As one embodiment, one bit block and a feature sequence are used together through OOK to generate the target wake-up signal.

As one embodiment, one bit block and a feature sequence are used together through FSK to generate the target wake-up signal.

As one embodiment, one bit block is used to generate the target wake-up signal through at least 1 or more of OOK modulation, transform precoding, mapping to physical resources, OFDM baseband signal generation, and modulation and upconversion.

As one embodiment, one bit block is used to generate the target wake-up signal through at least 1 or more of FSK modulation, transform precoding, mapping to physical resources, OFDM baseband signal generation, and modulation and upconversion.

As one embodiment, one bit block generates the target wake-up signal through at least 1 or more of OOK modulation, sequence generation/modulation, transform precoding, mapping to physical resources, OFDM baseband signal generation, and modulation and upconversion.

As one embodiment, one bit block generates the target wake-up signal through at least 1 or more of FSK modulation, sequence generation/modulation, transform precoding, mapping to physical resources, OFDM baseband signal generation, and modulation and upconversion.

As one embodiment, one bit block generates the target wake-up signal through at least 1 or more of oversampling or spreading/extension or repetition, transform precoding, mapping to physical resources, OFDM baseband signal generation, and modulation and upconversion.

As one embodiment, one bit block generates the target wake-up signal through at least 1 or more of oversampling or spreading/extension or repetition, sequence generation/modulation, transform precoding, mapping to physical resources, OFDM baseband signal generation, and modulation and upconversion.

As one embodiment, monitoring of the target wake-up signal is implemented at a radio frequency.

As one embodiment, monitoring of the target wake-up signal is implemented at an intermediate frequency.

As one embodiment, monitoring of the target wake-up signal is implemented at a baseband.

As one embodiment, monitoring of the target wake-up signal is implemented through envelop detection.

As one embodiment, monitoring of the target wake-up signal is implemented through correlation.

As one embodiment, monitoring of the target wake-up signal is implemented through energy detection.

As one embodiment, monitoring of the target wake-up signal is implemented through envelop detection and decoding.

As one embodiment, monitoring of the target wake-up signal is implemented through envelop detection and correlation.

As one embodiment, monitoring of the target wake-up signal is implemented through frequency modulation (FM) to amplitude modulation (AM) conversion and envelop detection.

As one embodiment, a monitoring manner of the target wake-up signal is implementation-related.

As one embodiment, a receiver used for monitoring the target wake-up signal is implementation-related.

As one embodiment, the monitoring of the target wake-up signal is related to a capability of the first node device.

As one embodiment, the target wake-up signal has only 1 configuration parameter.

As one embodiment, the target wake-up signal has a plurality of configuration parameters.

As one embodiment, any 1 configuration parameter value of the target wake-up signal is a value of 1 field in one IE.

As one embodiment, any 1 configuration parameter value of the target wake-up signal is a value of 1 field in an IE used to configure the wake-up signal.

As one embodiment, 1 configuration parameter value of the target wake-up signal is a value of 1 field in an IE used to configure the wake-up signal.

As one embodiment, 1 configuration parameter value of the target wake-up signal is a value of 1 field comprised in the first information block.

As one embodiment, any one configuration parameter value of the target wake-up signal is a value of 1 field comprised in the first information block.

As one embodiment, 1 configuration parameter value of the target wake-up signal is a parameter value used to configure a frequency domain resource of the target wake-up signal.

As one embodiment, 1 configuration parameter value of the target wake-up signal is a parameter value used to configure a time domain resource of the target wake-up signal.

As one embodiment, 1 configuration parameter value of the target wake-up signal is a parameter value used to configure a sequence resource used by the target wake-up signal.

As one embodiment, 1 configuration parameter value of the target wake-up signal is a parameter value used to configure a number of all or part of information bits carried by the target wake-up signal.

As one embodiment, 1 configuration parameter value of the target wake-up signal is a parameter value used to configure a number of bits comprised in at least 1 field carried by the target wake-up signal.

As one embodiment, 1 configuration parameter value of the target wake-up signal is a parameter value used to configure a number comprised in all or part of fields carried by the target wake-up signal.

As one embodiment, 1 configuration parameter value of the target wake-up signal is a parameter value used to configure a format used by the target wake-up signal.

As one embodiment, 1 configuration parameter value of the target wake-up signal is a parameter value used to configure whether the target wake-up signal is used to instruct the monitoring of a PEI (Paging Early Indication).

As one embodiment, 1 configuration parameter value of the target wake-up signal is a parameter value used to configure whether the target wake-up signal is used to instruct the monitoring of a PDCCH with a PS-RNTI-scrambled CRC.

As one embodiment, 1 configuration parameter value of the target wake-up signal is a parameter value used to configure a generation manner of the target wake-up signal.

As one embodiment, 1 configuration parameter value of the target wake-up signal is a parameter value used to configure a type of the target wake-up signal.

As one embodiment, 1 configuration parameter value of the target wake-up signal is a parameter value used to configure a modulation manner (OOK or FSK) of the target wake-up signal.

As one embodiment, the first signaling is transmitted through a PDCCH.

As one embodiment, the first signaling is transmitted through a PDCCH with a PEI-RNTI-scrambled CRC.

As one embodiment, the first signaling is transmitted through a PDCCH with a PS-RNTI-scrambled CRC.

As one embodiment, the first signaling comprises all or part of fields in a DCI format 2_6.

As one embodiment, the first signaling comprises all or part of fields in a DCI format 2_7.

As one embodiment, the first signaling comprises high-layer information.

As one embodiment, the first signaling comprises physical layer information.

As one embodiment, the first signaling comprises core network information.

As one embodiment, two expressions of "monitoring the first signaling" and "receiving information carried by the first signaling" are equivalent or can be used interchangeably.

As one embodiment, two expressions of "monitoring the first signaling" and "decoding the first signaling" are equivalent or can be used interchangeably.

As one embodiment, two expressions of "monitoring the first signaling" and "monitoring a PDCCH candidate carrying the first signaling" are equivalent or can be used interchangeably.

As one embodiment, two expressions of "monitoring the first signaling" and "decoding a PDCCH candidate that may carry the first signaling" are equivalent or can be used interchangeably.

As one embodiment, two expressions of "monitoring the first signaling" and "blindly decoding the first signaling" are equivalent or can be used interchangeably.

As one embodiment, two expressions of "monitoring the first signaling" and " performing decoding and a CRC check on the first signaling" are equivalent or can be used interchangeably.

As one embodiment, two expressions of "monitoring the first signaling" and "performing decoding and an RNTI (Radio Network Temporary Identity)-scrambled CRC check on the first signaling" are equivalent or can be used interchangeably.

As one embodiment, two expressions of "monitoring the first signaling" and "decoding the first signaling for one or more DCI (Downlink Control Information) Format(s)" are equivalent or can be used interchangeably.

As one embodiment, two expressions of "monitoring the first signaling" and "decoding the first signaling for one or more DCI payload sizes" are equivalent or can be used interchangeably.

As one embodiment, the second signaling is a PDCCH.

As one embodiment, the second signaling is a paging PDCCH.

As one embodiment, the second signaling comprises all or part of fields in a paging DCI format.

As one embodiment, the second signaling is a PDCCH with a P-RNTI-scrambled CRC.

As one embodiment, the second signaling comprises all or part of fields in a DCI format 1_0.

As one embodiment, the second signaling carries high-layer information.

As one embodiment, the second signaling carries physical layer information.

As one embodiment, the second signaling carries core network information.

As one embodiment, two expressions of "monitoring the second signaling" and "receiving information carried by the second signaling" are equivalent or can be used interchangeably.

As one embodiment, two expressions of "monitoring the second signaling" and "decoding the second signaling" are equivalent or can be used interchangeably.

As one embodiment, two expressions of "monitoring the second signaling" and "monitoring a PDCCH candidate carrying the second signaling" are equivalent or can be used interchangeably.

As one embodiment, two expressions of "monitoring the second signaling" and "decoding a PDCCH candidate that may carry the second signaling" are equivalent or can be used interchangeably.

As one embodiment, two expressions of "monitoring the second signaling" and "blindly decoding the second signaling" are equivalent or can be used interchangeably.

As one embodiment, two expressions of "monitoring the second signaling" and "performing decoding and a CRC check on the second signaling" are equivalent or can be used interchangeably.

As one embodiment, two expressions of "monitoring the second signaling" and "performing decoding and an RNTI (Radio Network Temporary Identity)-scrambled CRC check on the second signaling" are equivalent or can be used interchangeably.

As one embodiment, two expressions of "monitoring the second signaling" and "decoding the second signaling for one or more DCI (Downlink Control Information) Format(s)" are equivalent or can be used interchangeably.

As one embodiment, two expressions of "monitoring the second signaling" and "decoding the second signaling for one or more DCI payload sizes" are equivalent or can be used interchangeably.

As one embodiment, the monitor of the target wake-up signal is the first node device.

As one embodiment, "the monitor of the target wake-up signal" and "the first node device" are equivalent or can be used interchangeably.

As one embodiment, the monitor of the target wake-up signal is one piece of user equipment comprised in the first device group.

As one embodiment, the first device group only comprises the monitor of the target wake-up signal.

As one embodiment, the first device group also comprises user equipment other than the monitor of the target wake-up signal.

As one embodiment, the first device group is configurable, or the first device group is predefined.

As one embodiment, the user equipment comprised in the first device group is assigned by a core network.

As one embodiment, the user equipment comprised in the first device group is determined according to a capability of the user equipment.

As one embodiment, the first device group is a subset (or subgroup) of one user equipment set (or a user equipment group) corresponding to the same PO.

As one embodiment, the first device group is a subset (or subgroup) of one user equipment set (or a user equipment group) monitoring the same PO.

As one embodiment, the first device group is one subset (or subgroup) of a user equipment set (or a user equipment group) corresponding to an occasion occupied by the second signaling.

As one embodiment, the first device group is one subset (or subgroup) of a user equipment set (or a user equipment group) that can monitor the second signaling.

As one embodiment, the user equipment comprised in the first device group is determined according to a type of a wake-up signal receiver of the user equipment.

As one embodiment, the user equipment comprised in the first device group is determined according to a type of the user equipment.

As one embodiment, the user equipment comprised in the first device group is determined according to whether the user equipment has a subgroup ID assigned by a core network and whether the user equipment supports the core network to assign a subgroup.

As one embodiment, the user equipment included in the first device group is determined according to whether the user equipment has an index or identity of at least 1 of the X1 configuration sets in the present application assigned by a core network and whether the user equipment supports the core network to assign the index or identity of the at least 1 of the X1 configuration sets.

As one embodiment, all user equipment comprised in the first device group supports a core network to assign a subgroup.

As one embodiment, all user equipment included in the first device group supports a core network to assign an index or identity of at least 1 of the X1 configuration sets in the present application.

As one embodiment, all user equipment comprised in the first device group supports a core network to assign a subgroup, and subgroup IDs assigned by the core network are equal to one same predefined value.

As one embodiment, all user equipment included in the first device group supports a core network to assign an index or identity of the target configuration set in the present application in the X1 configuration sets in the present application, and the index or identity that is of the target configuration set in the X1 configuration sets and that is assigned by the core network is equal to a predefined value.

As one embodiment, all user equipment comprised in the first device group supports a core network to assign a subgroup, and subgroup IDs assigned by the core network belong to one same predefined value range.

As one embodiment, all user equipment included in the first device group supports a core network to assign an index or identity of the target configuration set in the present application in the X1 configuration sets in the present application, and the index or identity that is of the target configuration set in the X1 configuration sets and that is assigned by the core network belongs to a predefined value range.

As one embodiment, all user equipment comprised in the first device group has the same or similar wake-up signal receiving capabilities.

As one embodiment, all user equipment comprised in the first device group uses the same or similar wake-up signal receivers.

As one embodiment, all user equipment comprised in the first device group does not support a core network to assign a subgroup.

As one embodiment, all user equipment included in the first device group does not support a core network to assign an index or identity of any 1 of the X1 configuration sets.

As one embodiment, all user equipment comprised in the first device group does not support a core network to assign a subgroup, or supports a core network to assign a subgroup, but subgroup IDs assigned by the core network are equal to one same predefined value.

As one embodiment, all user equipment included in the first device group does not support a core network to assign an index or identity of any 1 of the X1 configuration sets in the present application, or supports a core network to assign an index or identity of at least 1 of the X1 configuration sets but the index or identity that is of the configuration set and that is assigned by the core network is equal to one same predefined value.

As one embodiment, all user equipment comprised in the first device group does not support a core network to assign a subgroup, or supports a core network to assign a subgroup, but subgroup IDs assigned by the core network belong to one same predefined value range.

As one embodiment, all user equipment included in the first device group does not support a core network to assign an index or identity of any 1 of the X1 configuration sets in the present application, or supports a core network to assign an index or identity of at least 1 of the X1 configuration sets but the index or identity that is of the configuration set and that is assigned by the core network belongs to the same predefined value range.

As one embodiment, the user equipment included in the first device group is determined according to an identity of the user equipment.

As one embodiment, identities of all user equipment included in the first device group have the same modulo value for a configured or predefined parameter.

As one embodiment, 5G-S-TMSI of all user equipment comprised in the first device group meets the following formula:

$$GroupID = (floor(5G\text{-}S\text{-}TMSI/(N*Ns))) \bmod GroupNum$$

where GroupID represents an identity of the first device group, N represents a number of paging frames in a DRX cycle, Ns represents a number of paging occasions corresponding to one paging frame, and GroupNum represents a number of configured or predefined device groups.

As one embodiment, 5G-S-TMSI of all user equipment comprised in the first device group meets the following formula:

$$GroupID = (floor(5G\text{-}S\text{-}TMSI/(N*Ns))) \bmod GroupNum + Offset$$

where GroupID represents an identity of the first device group, N represents a number of paging frames in a DRX cycle, Ns represents a number of paging occasions corresponding to one paging frame, GroupNum represents a number of configured or predefined device groups, and Offset represents a configurable or predefined offset value.

As one embodiment, that the target wake-up signal is detected means that information carried by the target wake-up signal is received.

As one embodiment, that the target wake-up signal is detected means that an information bit carried by the target wake-up signal is correctly decoded.

As one embodiment, that the target wake-up signal is detected means that energy detection for the target wake-up signal exceeds one configured or predefined threshold value.

As one embodiment, that the target wake-up signal is detected means that a power value of envelop detection for the target wake-up signal exceeds one configured or predefined threshold value.

As one embodiment, that the target wake-up signal is detected means that a correlation peak of correlation detection for the target wake-up signal exceeds one configured or predefined threshold value.

As one embodiment, that the target wake-up signal is detected means that a CRC check for a bit carried by the target wake-up signal passes.

As one embodiment, a judgment criterion for the target wake-up signal being detected is implementation-related.

As one embodiment, a judgment criterion for the target wake-up signal being detected does not need to be defined by a standard protocol.

As one embodiment, whether the target wake-up signal is detected is implementation-related.

As one embodiment, whether the target wake-up signal is detected is implementation-related when a corresponding requirement is met.

As one embodiment, whether the target wake-up signal is detected is implementation-related, and the detection of the target wake-up signal meets at least one of the three requirements of a corresponding miss detection probability/rate, a false detection probability/rate, and a false alarm probability/rate.

As one embodiment, "the target wake-up signal carries an instruction for the first device group" includes: the target wake-up signal carries an index or identity of the first device group.

As one embodiment, "the target wake-up signal carries an instruction for the first device group" includes: at least 1 bit included in a bit block carried by the target wake-up signal is used for the first device group.

As one embodiment, "the target wake-up signal carries an instruction for the first device group" includes: at least 1 bit included in a bit block used to generate the target wake-up signal is used for the first device group.

As one embodiment, "the target wake-up signal carries an instruction for the first device group" includes: at least 1 bit included in a bit block used to generate the target wake-up signal corresponds to the first device group.

As one embodiment, "the target wake-up signal carries an instruction for the first device group" includes: a bit block including an index or identity of the first device group is used to generate the target wake-up signal.

As one embodiment, "the target wake-up signal carries an instruction for the first device group" includes: a bit block including a bit used to explicitly or implicitly instruct the first device group is used to generate the target wake-up signal.

As one embodiment, "the target wake-up signal carries an instruction for the first device group" includes: a bit value of at least 1 bit that corresponds to the first device group and that is carried by the target wake-up signal is set to a predefined value ("1" or "0"). As one dependent embodiment of the above embodiments, the predefined value is a bit value representing wake-up. As one dependent embodiment of the above embodiments, a position of the bit corresponding to the first device group in a plurality of bits carried by the target wake-up signal is configured or predefined. As one dependent embodiment of the above embodiments, a position of the bit corresponding to the first device group in a plurality of bits carried by the target wake-up signal is related to the identity or index of the first device group. As one dependent embodiment of the above embodiments, a position of the bit corresponding to the first device group in a plurality of bits carried by the target wake-up signal is related to an identity of the first node device.

As one embodiment, "the target wake-up signal carries an instruction for the first device group" includes: the target wake-up signal is used to at least wake up the at least 1 user equipment included in the first device group.

As one embodiment, "the target wake-up signal carries an instruction for the first device group" includes: the target wake-up signal is used to at least instruct the at least 1 user equipment included in the first device group to monitor a paging PDCCH or a PEI.

As one embodiment, "the target wake-up signal carries an instruction for the first device group" includes: the target wake-up signal is used to at least wake up a complete baseband processing function of the at least 1 user equipment included in the first device group.

As one embodiment, "the target wake-up signal carries an instruction for the first device group" includes: the target wake-up signal is used to at least instruct the at least 1 user equipment included in the first device group to start a complete baseband processing function.

As one embodiment, "the target wake-up signal does not carry the instruction for the first device group" includes: the target wake-up signal does not carry the instruction for the first device group.

As one embodiment, "the target wake-up signal does not carry the instruction for the first device group" includes: the target wake-up signal only carries information other than the instruction for the first device group.

As one embodiment, "the target wake-up signal does not carry the instruction for the first device group" includes: the target wake-up signal does not carry an index or identity of the first device group.

As one embodiment, "the target wake-up signal does not carry the instruction for the first device group" includes: a bit block carried by the target wake-up signal does not include any bit specifically used for the first device group.

As one embodiment, "the target wake-up signal does not carry the instruction for the first device group" includes: a bit block used to generate the target wake-up signal does not include any bit specifically used for the first device group.

As one embodiment, "the target wake-up signal does not carry the instruction for the first device group" includes: a bit block used to generate the target wake-up signal does not include any 1 bit specifically corresponding to the first device group.

As one embodiment, "the target wake-up signal does not carry the instruction for the first device group" includes: a bit block used to generate the target wake-up signal does not include an index or identity of the first device group.

As one embodiment, "the target wake-up signal does not carry the instruction for the first device group" includes: a bit block used to generate the target wake-up signal does not include a bit used to explicitly or implicitly instruct the first device group.

As one embodiment, "the target wake-up signal does not carry the instruction for the first device group" includes: a bit value of at least 1 bit that corresponds to the first device group and that is carried by the target wake-up signal is set to a predefined value ("0" or "1"). As one dependent embodiment of the above embodiments, the predefined value is a bit value representing no wake-up. As one dependent embodiment of the above embodiments, a position of the bit corresponding to the first device group in a plurality of bits carried by the target wake-up signal is configured or predefined. As one dependent embodiment of the above embodiments, a position of the bit corresponding to the first device group in a plurality of bits carried by the target wake-up signal is related to the identity or index of the first device group. As one dependent embodiment of the above embodiments, a position of the bit corresponding to the first device group in a plurality of bits carried by the target wake-up signal is related to an identity of the first node device.

As one embodiment, "the target wake-up signal does not carry the instruction for the first device group" includes: the target wake-up signal is only used to wake up user equipment other than the first device group.

As one embodiment, "the target wake-up signal does not carry the instruction for the first device group" includes: the target wake-up signal is only used to instruct user equipment other than the first device group to monitor a paging PDCCH or a PEI.

As one embodiment, "the target wake-up signal does not carry the instruction for the first device group" includes:

the target wake-up signal is only used to wake up a complete baseband processing function of user equipment other than the first device group.

As one embodiment, "the target wake-up signal does not carry the instruction for the first device group" includes: the target wake-up signal is only used to instruct user equipment other than the first device group to start a complete baseband processing function.

As one embodiment, technical features "when the target wake-up signal is detected and the target wake-up signal carries an instruction for the first device group" and "if the target wake-up signal is detected and the target wake-up signal carries an instruction for the first device group" are equivalent or can be used interchangeably.

As one embodiment, "whether to monitor the first signaling" and "whether it is required to monitor the first signaling" are equivalent or can be used interchangeably.

As one embodiment, "whether to monitor the first signaling" and "whether monitoring the first signaling is mandatory" are equivalent or can be used interchangeably.

As one embodiment, "whether to monitor the first signaling" and "whether it is expected to monitor the first signaling" are equivalent or can be used interchangeably.

As one embodiment, a technical feature "at least one of the first information block or the target wake-up signal is used to determine whether to monitor the first signaling" comprises the following meaning: at least one of the first information block or the target wake-up signal is used by the first node device in the present application to determine whether to monitor the first signaling.

As one embodiment, a technical feature "at least one of the first information block or the target wake-up signal is used to determine whether to monitor the first signaling" comprises the following meaning: both the first information block and the target wake-up signal are used to determine whether to monitor the first signaling.

As one embodiment, a technical feature "at least one of the first information block or the target wake-up signal is used to determine whether to monitor the first signaling" comprises the following meaning: the first information block is used to determine whether to monitor the first signaling.

As one embodiment, a technical feature "at least one of the first information block or the target wake-up signal is used to determine whether to monitor the first signaling" comprises the following meaning: the target wake-up signal is used to determine whether to monitor the first signaling.

As one embodiment, a technical feature "at least one of the first information block or the target wake-up signal is used to determine whether to monitor the first signaling" comprises the following meaning: at least one of the first information block or the target wake-up signal is used by the first node device to determine whether it is required to monitor the first signaling.

As one embodiment, a technical feature "at least one of the first information block or the target wake-up signal is used to determine whether to monitor the first signaling" includes the following meaning: all or part of the first information block is used to explicitly or implicitly instruct whether to monitor the first signaling.

As one embodiment, a technical feature "at least one of the first information block or the target wake-up signal is used to determine whether to monitor the first signaling" includes the following meaning: all or part of information bits carried by the target wake-up signal are used to explicitly or implicitly instruct whether to monitor the first signaling.

As one embodiment, a technical feature "at least one of the first information block or the target wake-up signal is used to determine whether to monitor the first signaling" includes the following meaning: at least 1 bit in a bit block used to generate the target wake-up signal is used to explicitly or implicitly instruct whether to monitor the first signaling.

As one embodiment, a technical feature "at least one of the first information block or the target wake-up signal is used to determine whether to monitor the first signaling" includes the following meaning: at least 1 field in a bit block used to generate the target wake-up signal is used to explicitly or implicitly instruct whether to monitor the first signaling.

As one embodiment, a technical feature "at least one of the first information block or the target wake-up signal is used to determine whether to monitor the first signaling" comprises the following meaning: whether to monitor the first signaling is related to a sequence used to generate the target wake-up signal.

As one embodiment, a technical feature "at least one of the first information block or the target wake-up signal is used to determine whether to monitor the first signaling" comprises the following meaning: whether to monitor the first signaling is related to modulation (OOK or FSK) used to generate the target wake-up signal.

As one embodiment, a technical feature "at least one of the first information block or the target wake-up signal is used to determine whether to monitor the first signaling" comprises the following meaning: whether to monitor the first signaling is related to a number of bits carried by the target wake-up signal.

As one embodiment, a technical feature "at least one of the first information block or the target wake-up signal is used to determine whether to monitor the first signaling" comprises the following meaning: whether to monitor the first signaling is related to a number or a position of time-frequency resources occupied by the target wake-up signal.

As one embodiment, a technical feature "at least one of the first information block or the target wake-up signal is used to determine whether to monitor the first signaling" comprises the following meaning: whether to monitor the first signaling is related to a device group targeted by the target wake-up signal.

As one embodiment, a technical feature "at least one of the first information block or the target wake-up signal is used to determine whether to monitor the first signaling" comprises the following meaning: whether to monitor the first signaling is related to a device group woken up by the target wake-up signal.

As one embodiment, a technical feature "at least one of the first information block or the target wake-up signal is used to determine whether to monitor the first signaling" comprises the following meaning: whether to monitor the first signaling is related to user equipment woken up by the target wake-up signal.

As one embodiment, a technical feature "at least one of the first information block or the target wake-up signal is used to determine whether to monitor the first signaling" includes the following meaning: all or part of the first information block is used to instruct whether the target wake-up signal is used to determine whether to monitor the first signaling.

As one embodiment, a technical feature "at least one of the first information block or the target wake-up signal is used to determine whether to monitor the first signaling" comprises the following meaning: when all or part of the first information block enables or turns on the target wake-up signal to determine whether to monitor the first signaling, whether to monitor the first signaling depends on the target wake-up signal; otherwise, whether to monitor the first signaling depends on a configuration or an instruction of the first information block.

As one embodiment, a technical feature "at least one of the first information block or the target wake-up signal is used to determine whether to monitor the first signaling" comprises the following meaning: when all or part of the first information block enables or turns on the target wake-up signal to determine whether to monitor the first signaling, whether to monitor the first signaling depends on the target wake-up signal; otherwise, whether to monitor the first signaling depends on a configuration or an instruction of RRC signaling.

As one embodiment, a technical feature "at least one of the first information block or the target wake-up signal is used to determine whether to monitor the first signaling" comprises the following meaning: when all or part of the first information block enables or turns on the target wake-up signal to determine whether to monitor the first signaling, whether to monitor the first signaling depends on the target wake-up signal; otherwise, whether to monitor the first signaling is predefined or default.

As one embodiment, a technical feature "at least one of the first information block or the target wake-up signal is used to determine whether to monitor the first signaling" comprises the following meaning: when all or part of the first information block enables or turns on the target wake-up signal to determine whether to monitor the first signaling, whether to monitor the first signaling depends on the target wake-up signal; otherwise, whether to monitor the first signaling depends on a capability of the first node device.

As one embodiment, "whether to monitor the second signaling" and "whether it is required to monitor the second signaling" are equivalent or can be used interchangeably.

As one embodiment, "whether to monitor the second signaling" and "whether monitoring the second signaling is mandatory" are equivalent or can be used interchangeably.

As one embodiment, "whether to monitor the second signaling" and "whether it is expected to monitor the second signaling" are equivalent or can be used interchangeably.

As one embodiment, a technical feature "the first signaling is used to determine whether to monitor the second signaling" comprises the following meaning: the first signaling is used by the first node device in the present application to determine whether to monitor the second signaling.

As one embodiment, a technical feature "the first signaling is used to determine whether to monitor the second signaling" includes the following meaning: all or part of the first signaling is used to explicitly or implicitly instruct whether to monitor the second signaling.

As one embodiment, a technical feature "the first signaling is used to determine whether to monitor the second signaling" comprises the following meaning: the first signaling is monitored, and the detected first signaling is used to determine whether to monitor the second signaling.

As one embodiment, a technical feature "the first signaling is used to determine whether to monitor the second signaling" comprises the following meaning: the first signaling is detected, and the first signaling is used to determine whether to monitor the second signaling.

As one embodiment, a technical feature "the first signaling is used to determine whether to monitor the second signaling" comprises the following meaning: the first signaling is monitored and detected, and the first signaling is used to determine whether to monitor the second signaling.

As one embodiment, a technical feature "the first signaling is used to determine whether to monitor the second signaling" comprises the following meaning: when the first signaling is monitored and detected, the first signaling is used to determine whether to monitor the second signaling; otherwise, whether to monitor the second signaling depends on the target wake-up signal or the first information block.

As one embodiment, a technical feature "the first signaling is used to determine whether to monitor the second signaling" comprises the following meaning: when the first signaling is monitored and detected, the first signaling is used to determine whether to monitor the second signaling; otherwise, the second signaling is monitored.

As one embodiment, a technical feature "the first signaling is used to determine whether to monitor the second signaling" includes the following meaning: the first signaling is used to instruct at least 1 device group, and whether the first device group is one of the at least 1 device group instructed by the first signaling is used to determine whether to monitor the second signaling.

As one embodiment, a technical feature "the first signaling is used to determine whether to monitor the second signaling" includes the following meaning: the first signaling is used to instruct at least 1 device group, and whether the first node device belongs to the 1 device group instructed by the first signaling is used to determine whether to monitor the second signaling.

As one embodiment, a technical feature "the first signaling is used to determine whether to monitor the second signaling" includes the following meaning: the first signaling is used to instruct at least 1 device group, and whether the first node device belongs to the 1 device group instructed by the first signaling and the first device group at the same time is used to determine whether to monitor the second signaling.

As one embodiment, a technical feature "the first signaling is used to determine whether to monitor the second signaling" includes the following meaning: the first signaling is used to instruct at least 1 device group; when the first node device belongs to the 1 device group instructed by the first signaling, the first node device monitors the second signaling; otherwise, the first node device is not required to monitor the second signaling.

As one embodiment, a technical feature "the first signaling is used to determine whether to monitor the second signaling" includes the following meaning: the first signaling is used to instruct at least 1 device group; when the first node device belongs to the 1 device group instructed by the first signaling and the first device group at the same time, the first node device monitors the second signaling; otherwise, the first node device is not required to monitor the second signaling.

As one embodiment, when the first signaling is monitored, the first signaling is used to instruct whether to monitor the second signaling.

As one embodiment, when the first signaling is monitored and detected, the first signaling is used to instruct whether to monitor the second signaling.

As one embodiment, technical features "the monitor of the target wake-up signal abandons monitoring the second signaling" and "the monitor of the target wake-up signal is not required to monitor the second signaling" are equivalent or can be used interchangeably.

As one embodiment, technical features "the monitor of the target wake-up signal abandons monitoring the second signaling" and "the monitor of the target wake-up signal decides whether to monitor the second signaling" are equivalent or can be used interchangeably.

As one embodiment, technical features "the monitor of the target wake-up signal abandons monitoring the second signaling" and "the monitor of the target wake-up signal may not monitor the second signaling" are equivalent or can be used interchangeably.

As one embodiment, technical features "the monitor of the target wake-up signal abandons monitoring the second signaling" and "the monitor of the target wake-up signal is allowed to abandon monitoring the second signaling" are equivalent or can be used interchangeably.

As one embodiment, a technical feature "when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal is not required to monitor the second signaling" includes the following meaning: the target wake-up signal is detected and the target wake-up signal carries the instruction for the first device group, at least one of the first information block or the target wake-up signal is used to determine whether to monitor the first signaling, and the first signaling is used to determine whether to monitor the second signaling.

As one embodiment, a technical feature "when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal is not required to monitor the second signaling" includes the following meaning: when the target wake-up signal is detected and the target wake-up signal does not carry the instruction for the first device group, and the monitor of the target wake-up signal is not required to monitor the second signaling.

As one embodiment, a technical feature "when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal is not required to monitor the second signaling" includes the following meaning: whether the target wake-up signal carries the instruction for the first device group is used to enable or disable at least one of the first information block or the target wake-up signal respectively to be used to determine whether to monitor the first signaling.

As one embodiment, a technical feature "when the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal is not required to monitor the second signaling" includes the following meaning: the target wake-up signal is detected, and whether the target wake-up signal carries the instruction for the first device group is used to enable or disable at least one of the first information block or the target wake-up signal respectively to be used to determine whether to monitor the first signaling.

As one embodiment, a technical feature "when the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal is not required to monitor the second signaling" includes the following meaning: the target wake-up signal is detected, and 1 or a combination of 2 or 3 of whether the target wake-up signal carries the instruction for the first device group, the first information block, or the target wake-up signal is used to determine whether to monitor the first signaling.

As one embodiment, when the target wake-up signal is detected and the target wake-up signal does not carry the instruction for the first device group, the monitor of the target wake-up signal is not required to monitor the first signaling.

As one embodiment, when the target wake-up signal is detected and the target wake-up signal does not carry the instruction for the first device group, the monitor of the target wake-up signal decides whether to monitor the first signaling.

As one embodiment, when the target wake-up signal is detected and the target wake-up signal does not carry the instruction for the first device group, whether to monitor the first signaling depends on a capability of the monitor of the target wake-up signal.

As one embodiment, when the target wake-up signal is detected and the target wake-up signal does not carry the instruction for the first device group, the monitor of the target wake-up signal is not expected (or cannot assume) that the detected first signaling instructs that the monitor of the target wake-up signal is required to monitor the second signaling.

As one embodiment, when the target wake-up signal is detected and the target wake-up signal does not carry the instruction for the first device group, the monitor of the target wake-up signal is not expected (or cannot assume) that the detected first signaling instructs that a bit value of a bit corresponding to a device group including the monitor of the target wake-up signal is equal to "1".

As one embodiment, when the target wake-up signal is not detected, the monitor of the target wake-up signal monitors the first signaling and the first signaling is used to determine whether to monitor the second signaling.

As one embodiment, when the target wake-up signal is not detected, the monitor of the target wake-up signal abandons monitoring the second signaling.

As one embodiment, when the target wake-up signal is not detected, the monitor of the target wake-up signal monitors the second signaling.

As one embodiment, when the target wake-up signal is not detected, whether the monitor of the target wake-up signal monitors the first signaling depends on a capability of the monitor of the target wake-up signal.

As one embodiment, when the target wake-up signal is not detected, whether the monitor of the target wake-up signal monitors the first signaling is predefined or configurable or default.

As one embodiment, when the target wake-up signal is not detected and the monitor of the target wake-up signal supports monitoring the first signaling, the monitor of the target wake-up signal monitors the first signaling and the first signaling is used to determine whether to monitor the second signaling; and when the target wake-up signal is not detected and the monitor of the target wake-up signal does not support monitoring the first signaling, the monitor of the target wake-up signal abandons monitoring the second signaling.

As one embodiment, when the target wake-up signal is not detected and the monitor of the target wake-up signal supports monitoring the first signaling, the monitor of the target wake-up signal monitors the first signaling and the first signaling is used to determine whether to monitor the second signaling; and when the target wake-up signal is not detected and the monitor of the target wake-up signal does not support monitoring the first signaling, the monitor of the target wake-up signal monitors the second signaling.

As one embodiment, the first information block is used to determine a time domain position offset between the first signaling and the second signaling.

As one embodiment, an information block other than the first information block is used to determine a time domain position offset between the first signaling and the second signaling.

As one embodiment, the first information block is used to determine a time domain position offset between the target wake-up signal and the second signaling.

As one embodiment, an information block other than the first information block is used to determine a time domain position offset between the target wake-up signal and the second signaling.

As one embodiment, a time domain position relationship between the target wake-up signal and the first signaling is used to determine whether to monitor the first signaling.

As one embodiment, an identity of the monitor of the target wake-up signal is used to determine a time domain position of the second signaling.

## Embodiment 2

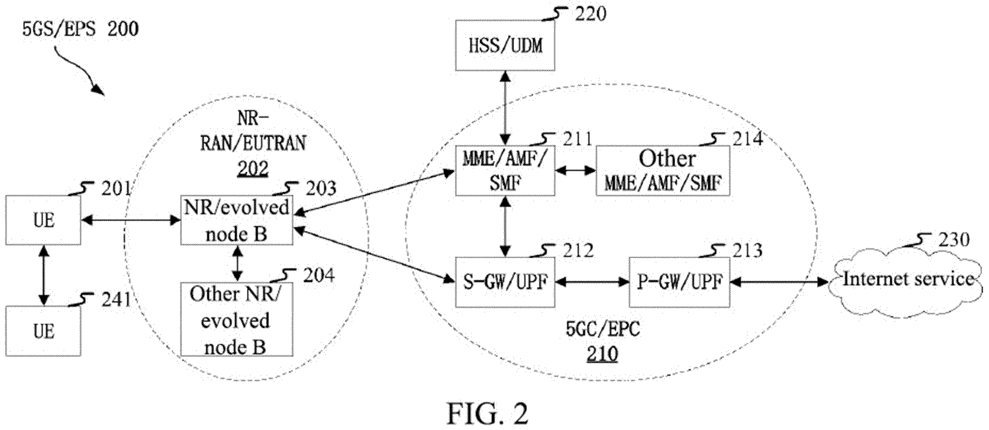

Embodiment 2 illustrates a schematic diagram of one network architecture according to the present application, as shown in FIG. 2. FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as a 5GS (5G System)/EPS (Evolved Packet System) 200 or some other suitable terms. The 5GS/EPS 200 may comprise one or more pieces of UE (User Equipment) 201, NG-RAN (next generation radio access network) 202, 5GC (5G Core Network)/EPC (Evolved Packet Core) 210, HSS (Home Subscriber Server)/UDM (Unified Data Management) 220, and Internet services 230. The 5GS/EPS can be interconnected with other access networks, but these entities/interfaces are not shown for simplicity. As shown in the figure, the 5GS/EPS provides a packet switching service, however, those skilled in the art will readily understand that various concepts presented throughout the present application can be extended to networks or other cellular networks that provide circuit switching services. The NG-RAN comprises an NR/evolved Node B (gNB/eNB) 203 and other gNB (eNB) 204. The gNB (eNB) 203 provides user and control plane protocol termination toward the UE201. The gNB (eNB) 203 may be connected to other gNB (eNB) 204 via an Xn/X2 interface (for example, backhaul). The gNB (eNB) 203 may also be referred to as a base station, a base transceiver station, a radio base station, a radio transceiver, a transceiver function, a basic service set (BSS), an extended service set (ESS), a TRP (transmit receive point), or some other suitable terms. The gNB (eNB) 203 provides the UE201 with an access point to the 5GC/EPC210. Examples of the UE201 include cellular telephones, smart phones, Session Initiation Protocol (SIP) telephones, laptops, personal digital assistants (PDAs), satellite radios, non-terrestrial base station communications, satellite mobile communications, global positioning systems, multimedia apparatuses, video apparatuses, digital audio players (for example, MP3 players), cameras, game consoles, drones, aircrafts, narrowband Internet of Things devices, machine type communication devices, land transportation vehicles, automobiles, wearable devices, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB (eNB) 203 is connected to the 5GC/EPC210 through an S1/NG interface. The 5GC/EPC210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise an operator's corresponding Internet protocol service, which may specifically include the Internet, intranets, IMS (IP Multimedia Subsystem), and packet switching streaming services.

As one embodiment, the UE201 corresponds to the first node device in the present application.

As one embodiment, the gNB (eNB) 201 corresponds to the second node device in the present application.

## Embodiment 3

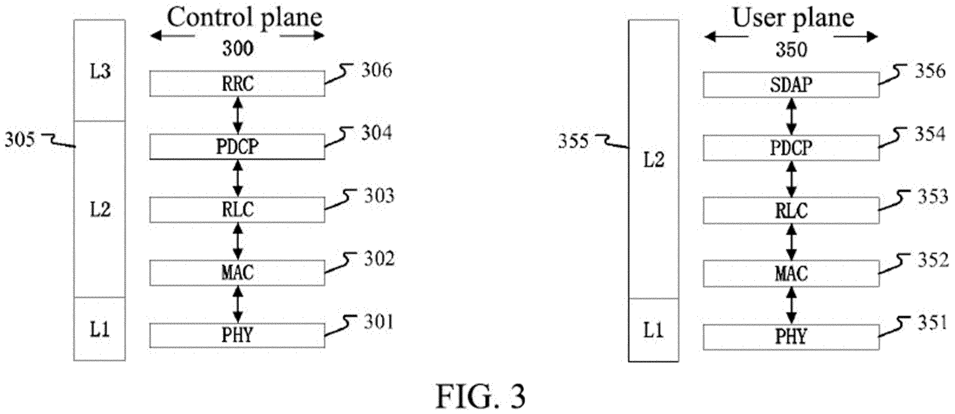

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 of a first node device (UE or gNB) and a second node device (gNB or UE) using three layers: Layer 1, Layer 2, and Layer 3. The Layer 1 (L1 layer) is the lowest layer and implements various PHY (physical layer) signal processing functions. The L1 layer will be referred to herein as PHY301. The Layer 2 (L2 layer) 305 is above the PHY301 and is responsible for the link between the first node device and the second node device through the PHY301. The L2 layer 305 comprises a MAC (Medium Access Control) sublayer 302, an RLC (Radio Link Control) sublayer 303, and a PDCP (Packet Data Convergence Protocol) sublayer 304, which terminate at the second node device. The PDCP sublayer 304 provides multiplexing between different radio bearers and logical channels. The PDCP sublayer 304 also provides security by encrypting data packets, and provides cross-zone mobility support for the first node device between the second node devices. The RLC sublayer 303 provides segmentation and reassembly of upper layer data packets, retransmission of lost data packets, and reordering of data packets to compensate for disordered reception caused by HARQ. The MAC sublayer 302 provides multiplexing between logical channels and transport channels. The MAC sublayer 302 is also responsible for assigning various radio resources (for example, resource blocks) in one cell between the first node devices. The MAC sublayer 302 is also responsible for HARQ operations. An RRC (Radio Resource Control) sublayer 306 in the Layer 3 (L3 layer) in the control plane 300 is responsible for obtaining radio resources (that is, radio bearers) and configuring lower layers using an RRC signaling between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as the corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS streams and data radio bearers (DRBs) to support service diversity. Although not shown in the figure, the first node device may have several upper layers above the L2 layer 355, comprising a network layer (for example, an IP layer) terminating at the P-GW on the network side and an application layer terminating at the other end of the connection (for example, remote UE, a server, etc.).

As one embodiment, the radio protocol architecture in FIG. 3 is applicable to the first node device in the present application.

As one embodiment, the radio protocol architecture in FIG. 3 is applicable to the second node device in the present application.

**Embodiment 4**

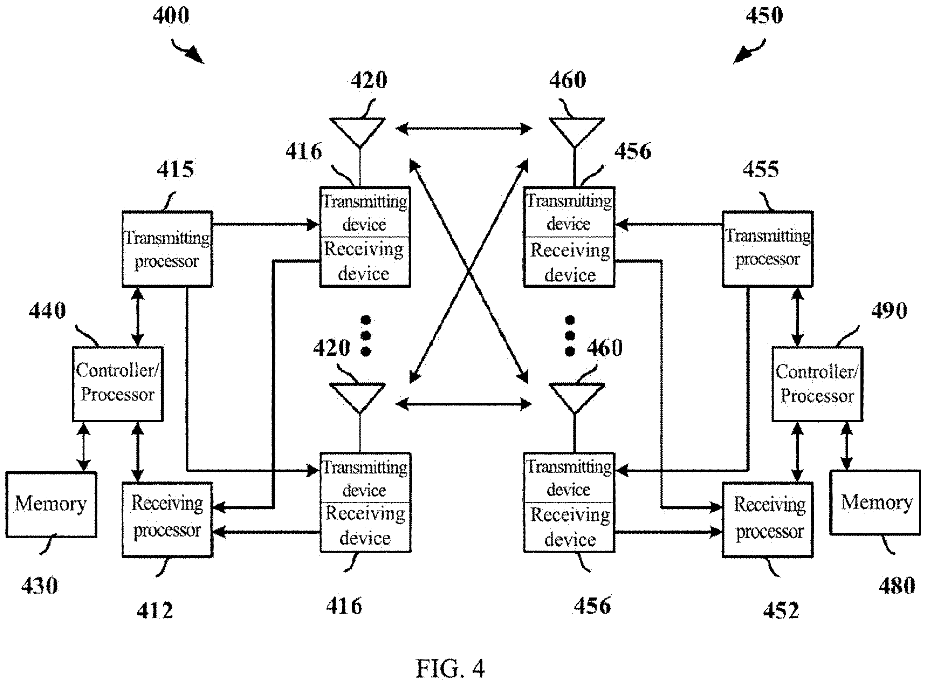

Embodiment 4 shows a schematic diagram of a first node device and a second node device according to one embodiment of the present application, as shown in FIG. 4.

The first node device 450 may comprise a controller/processor 490, a data source/buffer 480, a receiving processor 452, a transmitting device/receiving device 456, and a transmitting processor 455, and the transmitting device/receiving device 456 comprises an antenna 460.

The second node device 410 may comprise a controller/processor 440, a data source/buffer 430, a receiving processor 412, a transmitting device/receiving device 416, and a transmitting processor 415, and the transmitting device/receiving device 416 comprises an antenna 420.

In DL (Downlink), upper layer packets, such as high-layer information comprised in a first information block in the present application, high-layer information comprised in a first signaling (if the first signaling comprises the high-layer information), and high-layer information comprised in a second signaling (if the second signaling comprises the high-layer information), are provided to the controller/processor 440. The controller/processor 440 implements functions of an L2 layer and higher layers. In the DL, the controller/processor 440 provides packet header compression, encryption, packet segmentation and reordering, multiplexing between logic and transport channels, and radio resource assignment for the first node device 450 based on various priority metrics. The controller/processor 440 is also responsible for HARQ operations, retransmission of lost packets, and signalings to the first node device 450. For example, the high-layer information comprised in the first information block in the present application, the high-layer information comprised in the first signaling (if the first signaling comprises the high-layer information), and the high-layer information comprised in the second signaling (if the second signaling comprises the high-layer information) are generated in the controller/processor 440. The transmitting processor 415 implements various signal processing functions for an L1 layer (that is, a physical layer), comprising coding, interleaving, scrambling, modulation, power control/assignment, precoding, and physical layer control signaling generation, and the like. For example, a physical layer signal carrying the first information block in the present application, a physical layer signal of a target wake-up signal, a physical layer signal corresponding to the first signaling, and a physical layer signal corresponding to the second signaling are generated in the transmitting processor 415. Generated modulation symbols are divided into parallel streams. Each stream is mapped to a corresponding multi-carrier subcarrier and/or multi-carrier symbol, and then mapped to the antenna 420 by the transmitting processor 415 via the transmitting device 416 to be transmitted in the form of a radio frequency signal. At a receiving end, each receiving device 456 receives the radio frequency signal through the corresponding antenna 460, and each receiving device 456 recovers baseband information modulated onto a radio frequency carrier and provides the baseband information to the receiving processor 452. The receiving processor 452 implements various signal receiving processing functions of the L1 layer. The signal receiving processing function comprises monitoring the physical layer signal carrying the first information block in the present application, the target wake-up signal, the first signaling, and the second signaling, performing demodulation based on various modulation schemes (for example, binary phase shift keying (BPSK) and quadrature phase shift keying (QPSK)) through multi-carrier symbols in multi-carrier symbol streams, then performing descrambling, decoding, and deinterleaving to recover data or control transmitted by the second node device 410 on a physical channel, and then providing the data and the control signal to the controller/processor 490. The controller/processor 490 is responsible for the L2 layer and higher layers. The controller/processor 490 interprets the high-layer information comprised in the first information block, the high-layer information comprised in the first signaling (if the first signaling comprises the high-layer information), and the high-layer information comprised in the second signaling (if the second signaling comprises the high-layer information) in the present application. The controller/processor may be associated with a memory 480 storing program codes and data. The memory 480 may be referred to as a computer-readable medium.

In uplink (UL) transmission, similar to downlink transmission, high-layer information comprising high-layer information comprised in a second information block in the present application is generated by the controller/processor 490 and then the transmitting processor 455 implements various signal transmission processing functions for the L1 layer (that is, physical layer), a physical layer signal carrying the second information block is generated in the transmitting processor 455 and then mapped to the antenna 460 by the transmitting processor 455 via the transmitting device 456 to be transmitted in the form of a radio frequency signal. The receiving device 416 receives the radio frequency signal through the corresponding antenna 420, and each receiving device 416 recovers baseband information modulated onto a radio frequency carrier and provides the baseband information to the receiving processor 412. The receiving processor 412 implements various signal receiving processing functions for the L1 layer (that is, the physical layer), comprising receiving and processing the physical layer signal carrying the second information block, and then provides data and/or a control signal to the controller/processor 440. The functions for the L2 layer implemented in the controller/processor 440 comprise interpreting the high-layer information, comprising interpreting the higher layer information carried by the second information block. The controller/processor may be associated with the buffer 430 storing program codes and data. The buffer 430 may be a computer-readable medium.

As one embodiment, the first node device 450 apparatus comprises: at least one processor and at least one memory, where the at least one memory comprises computer program codes; and the at least one memory and the computer program codes are configured to be used together with the at least one processor, and the first node device 450 apparatus at least comprises: receiving the first information block and monitoring the target wake-up signal, where the first information block is used to determine at least 1 configuration parameter value of the target wake-up signal; and determining whether to monitor a first signaling and determining whether to monitor a second signaling, wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling.

As one embodiment, the first node device 450 apparatus comprises: a memory storing a computer-readable instruction program, where the computer-readable instruction program generates an action when executed by at least one processor, and the action comprises: receiving the first information block and monitoring the target wake-up signal, where the first information block is used to determine at least 1 configuration parameter value of the target wake-up signal; and determining whether to monitor a first signaling and determining whether to monitor a second signaling, wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling.

As one embodiment, the second node device 410 apparatus comprises: at least one processor and at least one memory, where the at least one memory comprises computer program codes; and the at least one memory and the computer program codes are configured to be used together with the at least one processor. The second node device 410 apparatus at least comprises: sending the first information block and sending the target wake-up signal, where the first information block is used to determine at least 1 configuration parameter value of the target wake-up signal; and sending a first signaling and sending a second signaling, wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether the first signaling is monitored, and the first signaling is used to determine whether the second signaling is monitored; and when the target wake-up signal is detected and the target wake-up signal does not carry the instruction for the first device group, the monitor of the target wake-up signal abandons monitoring the second signaling.

As one embodiment, the second node device 410 apparatus comprises: a memory storing a computer-readable instruction program, where the computer-readable instruction program generates an action when executed by at least one processor, and the action comprises: sending the first information block and sending the target wake-up signal, where the first information block is used to determine at least 1 configuration parameter value of the target wake-up signal; and sending a first signaling and sending a second signaling, wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether the first signaling is monitored, and the first signaling is used to determine whether the second signaling is monitored; and when the target wake-up signal is detected and the target wake-up signal does not carry the instruction for the first device group, the monitor of the target wake-up signal abandons monitoring the second signaling.

As one embodiment, the first node device 450 is one piece of user equipment (UE).

As one embodiment, the second node device 410 is one base station device (gNB/eNB).

As one embodiment, the receiving device 456 (comprising the antenna 460), the receiving processor 452, and the controller/processor 490 are used to receive the first information block in the present application.

As one embodiment, the receiving device 456 (comprising the antenna 460) is used to monitor the target wake-up signal in the present application.

As one embodiment, the receiving device 456 (comprising the antenna 460), the receiving processor 452, and the controller/processor 490 are used to monitor the first signaling in the present application.

As one embodiment, the receiving device 456 (comprising the antenna 460), the receiving processor 452, and the controller/processor 490 are used to monitor the second signaling in the present application.

As one embodiment, the transmitting device 456 (comprising the antenna 460), the transmitting processor 455, and the controller/processor 490 are used to send the second information block in the present application.

As one embodiment, the transmitting device 416 (comprising the antenna 420), the transmitting processor 415, and the controller/processor 440 are used to send the first information block in the present application.

As one embodiment, the transmitting device 416 (comprising the antenna 420) is used to send the target wake-up signal.

As one embodiment, the transmitting device 416 (comprising the antenna 420), the transmitting processor 415, and the controller/processor 440 are used to send the first signaling in the present application.

As one embodiment, the transmitting device 416 (comprising the antenna 420), the transmitting processor 415, and the controller/processor 440 are used to send the second signaling in the present application.

As one embodiment, the receiving device 416 (comprising the antenna 420), the receiving processor 412, and the controller/processor 440 are used to receive the second information block in the present application.

## Embodiment 5

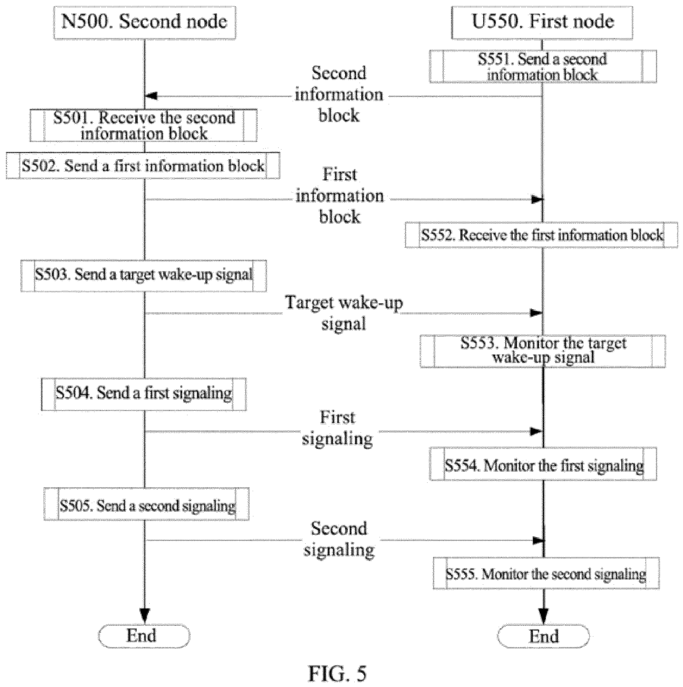

Embodiment 5 illustrates a flowchart of wireless signal transmission according to one embodiment of the present application, as shown in FIG. 5. In FIG. 5, a second node device N500 is a maintenance base station of a service cell of a first node device U550. It is particularly noted that the order in this example does not limit the order of signal transmission and the order of implementation in the present application.

For **the second node device N500,** a second information block is received in step S501, a first information block is sent in step S502, a target wake-up signal is sent in step S503, a first signaling is sent in step S504, and a second signaling is sent in step S505.

For **the first node device U550,** the second information block is sent in step S551, the first information block is received in step S552, the target wake-up signal is monitored in step S553, the first signaling is monitored in step S554, and the second signaling is monitored in step S555.

In Embodiment 5, the first information block is used to determine at least 1 configuration parameter value of the target wake-up signal; a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling; and the second information block is used to instruct at least 1 band, and the monitor of the target wake-up signal supports receiving a wake-up signal on each band instructed by the second information block.

As one embodiment, the second information block instructs that the reception of the wake-up signal is supported on each band, so that the performance of a receiver may be considered more flexibly, and configuration and receiving performance of the wake-up signal may be optimized.

As one embodiment, the second information block is used to instruct a capability of the first node device.

As one embodiment, the second information block is used to instruct a capability of receiving the wake-up signal of the first node device.

As one embodiment, the second information block is used to instruct that the first node device has capabilities to receive the wake-up signal and receive a PEI at the same time.

As one embodiment, the second information block is transmitted through an air interface or a wireless interface.

As one embodiment, the second information block is also transmitted through an X2 interface, an Xn interface, or an NG interface.

As one embodiment, the second information block is also transmitted between network nodes.

As one embodiment, the second information block is received by the network node through an RAN interface and then also transmitted to another network node or to a core network.

As one embodiment, the second information block is received by the network node through a Uu interface and then also transmitted to another network node or to a core network.

As one embodiment, the second information block comprises all or part of a higher layer signaling or a physical layer signaling.

As one embodiment, the second information block is earlier than the first information block.

As one embodiment, the second information block is later than the first information block.

As one embodiment, the second information block comprises all or part of an RRC signaling, or the second information block comprises all or part of an MAC layer signaling.

As one embodiment, the second information block is transmitted through a PUSCH or a PUCCH (Physical Uplink Control Channel).

As one embodiment, the second information block is per UE, or the second information block is per feature set, or the second information block is per band, or the second information block is per band combination, or the second information block is per band list, or the second information block is per frequency range, or the second information block is per duplex mode.

As one embodiment, the second information block is related to a frequency range.

As one embodiment, the second information block is related to a duplex mode (TDD or FDD).

As one embodiment, the second information block comprises all or part of "UE-RadioPagingInfo".

As one embodiment, the second information block comprises all or part of "UERadioPagingInformation".

As one embodiment, the second information block comprises all or part of "UE-NR-Capability-v1900".

As one embodiment, the second information block comprises all or part of "LPWUS-Parameters-v1900".

As one embodiment, the second information block comprises all or part of "lpwus-SubgroupingSupportBandList-r19".

As one embodiment, the second information block is used to instruct a UE capability required for paging.

As one embodiment, a technical feature "the second information block is used to instruct at least 1 band" includes the following meaning: all or part of the second information block is used by the first node device in the present application to explicitly or implicitly instruct the at least 1 band.

As one embodiment, a technical feature "the second information block is used to instruct at least 1 band" includes the following meaning: all or part of the second information block is used by the second node device in the present application to explicitly or implicitly instruct the at least 1 band.

As one embodiment, a technical feature "the second information block is used to instruct at least 1 band" includes the following meaning: all or part of the second information block is used by the first node device in the present application to explicitly or implicitly instruct the at least 1 band to the second node device in the present application.

As one embodiment, a technical feature "the second information block is used to instruct at least 1 band" includes the following meaning: all or part of the second information block is used by the second node device in the present application to explicitly or implicitly instruct the at least 1 band to another network node or core network.

As one embodiment, a technical feature "the second information block is used to instruct at least 1 band" includes the following meaning: all or part of the second information block is used by the second node device in the present application to explicitly or implicitly instruct the at least 1 band to another network node or core network.

As one embodiment, a technical feature "the second information block is used to instruct at least 1 band" includes the following meaning: the second information block is used to instruct a band list.

As one embodiment, a technical feature "the second information block is used to instruct at least 1 band" includes the following meaning: the second information block is used to instruct a band that supports monitoring (or receiving) the wake-up signal.

As one embodiment, a number of bands instructed by the second information block is not greater than 1024.

As one embodiment, the second information block is also used to instruct a receiver parameter value supported by the first node device.

As one embodiment, the second information block is also used to instruct a receiver type supported by the first node device.

As one embodiment, the second information block is also used to instruct a receiving parameter value of a wake-up signal supported by the first node device.

As one embodiment, the second information block is also used to instruct at least 1 configuration parameter value of a wake-up signal supported by the first node device.

As one embodiment, a technical feature "the monitor of the target wake-up signal supports receiving a wake-up signal on each band instructed by the second information block" includes the following meaning: the monitor of the target wake-up signal has a capability to monitor (or receive) the wake-up signal on each band instructed by the second information block.

As one embodiment, a technical feature "the monitor of the target wake-up signal supports receiving a wake-up signal on each band instructed by the second information block" includes the following meaning: the monitor of the target wake-up signal supports receiving a signal or an instruction used for paging wake-up on each band instructed by the second information block.

As one embodiment, a technical feature "the monitor of the target wake-up signal supports receiving a wake-up signal on each band instructed by the second information block" includes the following meaning: the monitor of the target wake-up signal supports receiving a signal or an instruction used for DRX wake-up on each band instructed by the second information block.

As one embodiment, a technical feature "the monitor of the target wake-up signal supports receiving a wake-up signal on each band instructed by the second information block" includes the following meaning: the monitor of the target wake-up signal supports waking up paging on each band instructed by the second information block.

As one embodiment, a technical feature "the monitor of the target wake-up signal supports receiving a wake-up signal on each band instructed by the second information block" includes the following meaning: the monitor of the target wake-up signal supports early instruction of paging on each band instructed by the second information block.

As one embodiment, the monitor of the target wake-up signal supports receiving a wake-up signal having 1 or more given configuration parameter values on each band instructed by the second information block.

As one embodiment, the monitor of the target wake-up signal supports receiving the wake-up signal on each band instructed by the second information block and supports a given wake-up signal receiver type.

As one embodiment, the monitor of the target wake-up signal supports receiving the wake-up signal on each band instructed by the second information block and supports a given wake-up signal receiver capability.

As one embodiment, the monitor of the target wake-up signal supports receiving the wake-up signal on each band instructed by the second information block and supports a given wake-up signal receiver parameter value.

As one embodiment, the second information block is also used to instruct that the monitor of the target wake-up signal supports X1 configuration sets.

As one embodiment, the second information block is also used to instruct that the monitor of the target wake-up signal supports a plurality of configuration sets for the wake-up signal.

As one embodiment, the second information block is also used to instruct that the monitor of the target wake-up signal supports grouping (or subgrouping) user equipment.

As one embodiment, the monitor of the target wake-up signal supports 1 or any combination of {receiving (or monitoring) a wake-up signal, receiving (or monitoring) a wake-up signal having 1 or more given configuration parameter values, grouping (or subgrouping) user equipment, and supporting a plurality of configuration sets for the wake-up signal} on each band instructed by the second information block.

## Embodiment 6

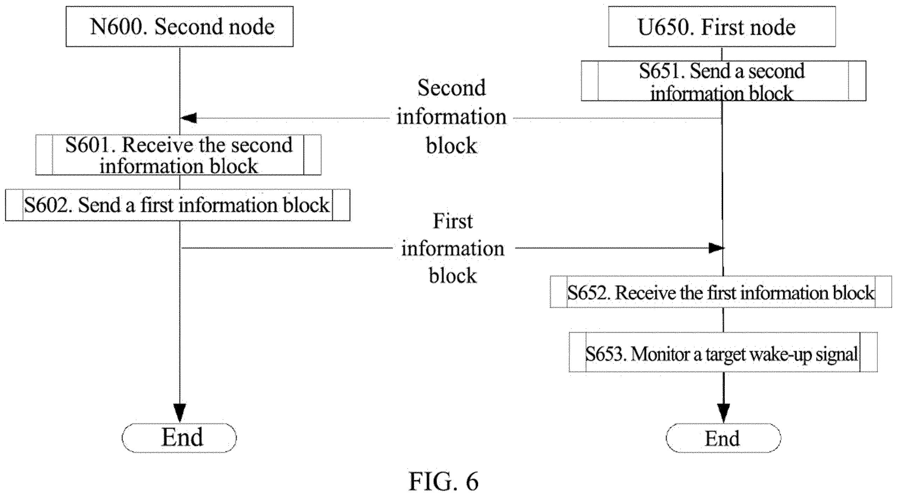

Embodiment 6 illustrates another flowchart of wireless signal transmission according to one embodiment of the present application, as shown in FIG. 6. In FIG. 6, a second node device N600 is a maintenance base station of a service cell of a first node device U650. It is particularly noted that the order in this example does not limit the order of signal transmission and the order of implementation in the present application.

For **the second node device N600,** a second information block is received in step S601, and a first information block is sent in step S602.

For **the first node device U650,** the second information block is sent in step S651, the first information block is received in step S652, and a target wake-up signal is monitored in step S653.

In Embodiment 6, the first information block is used to determine at least 1 configuration parameter value of the target wake-up signal; a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor first signaling, and the first signaling is used to determine whether to monitor second signaling; when the target wake-up signal is detected and the target wake-up signal does not carry the instruction for the first device group, the monitor of the target wake-up signal abandons monitoring the second signaling; and the second information block is used to instruct at least 1 band, and the monitor of the target wake-up signal supports receiving a wake-up signal on each band instructed by the second information block.

### Embodiment 7

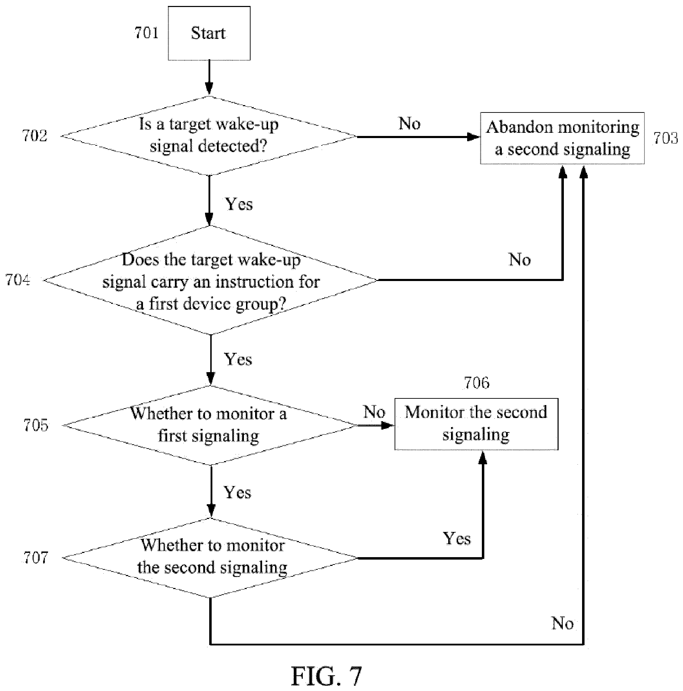

Embodiment 7 illustrates a schematic diagram of a target wake-up signal according to one embodiment of the present application, as shown in FIG. 7. In FIG. 7, each rectangle represents an operation, and each rhombus represents a judgment. Starting from step 701, whether the target wake-up signal is detected is judged in step 702, the monitoring of second signaling is abandoned in step 703, whether the target wake-up signal carries an instruction for a first device group is judged in step 704, whether to monitor first signaling is judged in step 705, the second signaling is monitored in step 706, and whether to monitor the second signaling is judged in step 707. It should be particularly pointed out that sequence numbers of steps are only used as step identities in one example and do not limit execution orders among various steps.

In Embodiment 7, the target wake-up signal in the present application is not detected; and a monitor of the target wake-up signal monitors the first signaling in the present application, and the first signaling is used to determine whether to monitor the second signaling in the present application, or a monitor of the target wake-up signal abandons monitoring the second signaling.

As one embodiment, the first signaling is monitored when the target wake-up signal is not detected, and whether to monitor the second signaling is determined according to the first signaling, thereby supporting an optimized design between power consumption and false alarm performance.

As one embodiment, when the target wake-up signal is not detected, the monitoring of the second signaling is abandoned, to further save the power consumption.

As one embodiment, that the target wake-up signal is not detected means that no wake-up signal is detected on a time-frequency resource assigned to the target wake-up signal.

As one embodiment, that the target wake-up signal is not detected means that no wake-up signal is detected on a time-frequency resource and a sequence resource that are assigned to the target wake-up signal.

As one embodiment, that the target wake-up signal is not detected means that information carried by the target wake-up signal is not correctly decoded.

As one embodiment, that the target wake-up signal is not detected means that it is not detected that energy detection of any wake-up signal exceeds one configured or predefined threshold value on a resource assigned to the target wake-up signal.

As one embodiment, that the target wake-up signal is not detected means that a power value of envelop detection for the target wake-up signal does not exceed one configured or predefined threshold value.

As one embodiment, that the target wake-up signal is not detected means that a correlation peak of correlation detection for the target wake-up signal does not exceed one configured or predefined threshold value.

As one embodiment, that the target wake-up signal is not detected means that a CRC check for a bit carried by the target wake-up signal does not pass.

As one embodiment, a technical feature "the monitor of the target wake-up signal monitors the first signaling, and the first signaling is used to determine whether to monitor the second signaling" comprises the following meaning: the monitor of the target wake-up signal monitors the first signaling, and the first signaling is used to determine whether to monitor the second signaling when the first signaling is detected.

As one embodiment, a technical feature "the monitor of the target wake-up signal monitors the first signaling, and the first signaling is used to determine whether to monitor the second signaling" comprises the following meaning: the monitor of the target wake-up signal monitors the first signaling; when the first signaling is detected, the first signaling is used to determine whether to monitor the second signaling; and when the first signaling is not detected, the monitor of the target wake-up signal monitors the second signaling.

As one embodiment, a technical feature "the monitor of the target wake-up signal monitors the first signaling, and the first signaling is used to determine whether to monitor the second signaling" comprises the following meaning: the monitor of the target wake-up signal monitors the first signaling; when the first signaling is detected, the first signaling is used to determine whether to monitor the second signaling; and when the first signaling is not detected, the monitor of the target wake-up signal is not required to monitor the second signaling.

As one embodiment, a technical feature "the monitor of the target wake-up signal monitors the first signaling, and the first signaling is used to determine whether to monitor the second signaling" comprises the following meaning: the monitor of the target wake-up signal monitors the first signaling; when the first signaling is detected, the first signaling is used to determine whether to monitor the second signaling; and when the first signaling is not detected, whether the monitor of the target wake-up signal monitors the second signaling depends on at least one of the first information block or the target wake-up signal.

As one embodiment, a technical feature "the monitor of the target wake-up signal monitors the first signaling, and the first signaling is used to determine whether to monitor the second signaling" comprises the following meaning: the monitor of the target wake-up signal monitors the first signaling; whether the first signaling is detected is used to determine whether to monitor the second signaling.

As one embodiment, a technical feature "the monitor of the target wake-up signal monitors the first signaling, and the first signaling is used to determine whether to monitor the second signaling" comprises the following meaning: the monitor of the target wake-up signal monitors the first signaling; whether the first signaling is detected and the first signaling detected when the first signaling is detected are both used to determine whether to monitor the second signaling.

As one embodiment, a technical feature "the target wake-up signal is not detected; and the monitor of the target wake-up signal monitors the first signaling, and the first signaling is used to determine whether to monitor the second signaling, or the monitor of the target wake-up signal abandons monitoring the second signaling" comprises the following meaning: when the target wake-up signal is not detected, the monitor of the target wake-up signal executes a first behavior or executes a second behavior; the first behavior comprises monitoring the first signaling, where the first signaling is used to determine whether to monitor the second signaling; and the second behavior comprises abandoning monitoring the second signaling.

As one embodiment, a technical feature "the target wake-up signal is not detected; and the monitor of the target wake-up signal monitors the first signaling, and the first signaling is used to determine whether to monitor the second signaling, or the monitor of the target wake-up signal abandons monitoring the second signaling" comprises the following meaning: the target wake-up signal is not detected; and the monitor of the target wake-up signal monitors the first signaling, where the first signaling is used to determine whether to monitor the second signaling.

As one embodiment, a technical feature "the target wake-up signal is not detected; and the monitor of the target wake-up signal monitors the first signaling, and the first signaling is used to determine whether to monitor the second signaling, or the monitor of the target wake-up signal abandons monitoring the second signaling" comprises the following meaning: the target wake-up signal is not detected; and the monitor of the target wake-up signal abandons monitoring the second signaling.

**Embodiment 8**

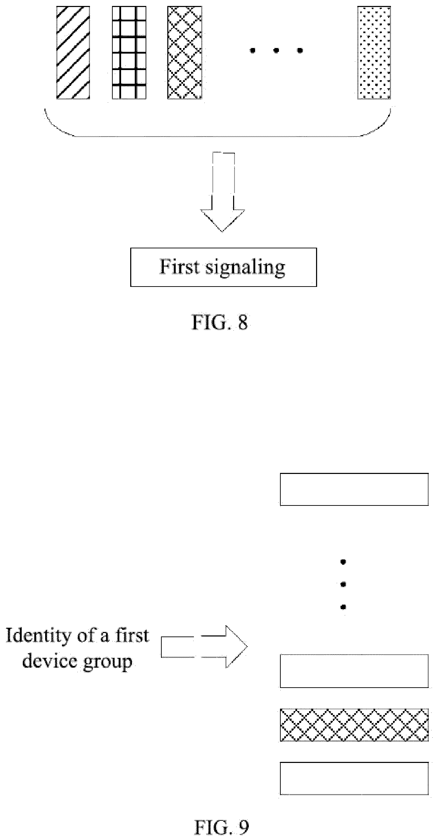

Embodiment 8 illustrates a schematic diagram of G1 device groups according to one embodiment of the present application, as shown in FIG. 8. In FIG. 8, each filled rectangle represents one of the G1 device groups, and different fillings represent different device groups.

In Embodiment 8, the first signaling in the present application is associated with the G1 device groups, and the G1 is a positive integer greater than 1; a second device group is one of the G1 device groups, and a monitor of a target wake-up signal in the present application belongs to the second device group; and an instruction value that is of the second device group and that is carried by the first signaling is used to determine whether to monitor the second signaling in the present application.

As one embodiment, G1 is configurable or is predefined.

As one embodiment, the G1 device groups are configurable or are predefined.

As one embodiment, the first information block is used to determine the G1 device groups.

As one embodiment, an information block other than the first information block is used to determine the G1 device groups.

As one embodiment, any one of the G1 device groups is a subgroup.

As one embodiment, any one of the G1 device groups is a subgroup configured by IE "subgroupConfig".

As one embodiment, any one of the G1 device groups is a PEI subgroup.

As one embodiment, one of the G1 device groups is a subgroup assigned by a core network.

As one embodiment, any one of the G1 device groups is a subgroup divided based on UE_ID.

As one embodiment, one of the G1 device groups is a subgroup divided based on UE_ID, and another of the G1 device groups is a subgroup assigned by a core network.

As one embodiment, any two of the G1 device groups are different.

As one embodiment, two of the G1 device groups are the same.

As one embodiment, at least one of the G1 device groups is a subgroup assigned by a core network, and one of the G1 device groups is composed of user equipment that does not support core network assignment.

As one embodiment, any one of the G1 device groups only comprises one piece of user equipment.

As one embodiment, at least one of the G1 device groups comprises a plurality of user equipment.

As one embodiment, the first device group is one of the G1 device groups.

As one embodiment, the first device group is not one of the G1 device groups.

As one embodiment, a technical feature "the first signaling is associated with the G1 device groups" comprises the following meaning: the first signaling and the G1 device groups are associated with the same paging occasion.

As one embodiment, a technical feature "the first signaling is associated with the G1 device groups" comprises the following meaning: the first signaling and the G1 device groups are for the same paging occasion.

As one embodiment, a technical feature "the first signaling is associated with the G1 device groups" comprises the following meaning: the first signaling and the G1 device groups are for the same group of paging occasions.

As one embodiment, a technical feature "the first signaling is associated with the G1 device groups" comprises the following meaning: information bits comprised in the first signaling correspond to the G1 device groups, respectively.

As one embodiment, a technical feature "the first signaling is associated with the G1 device groups" comprises the following meaning: the first signaling comprises at least G1 bits, and the G1 bits correspond to the G1 device groups, respectively.

As one embodiment, a technical feature "the first signaling is associated with the G1 device groups" includes the following meaning: the first signaling includes at least G1 bits, and the G1 bits are respectively used for early paging instructions of the G1 device groups.

As one embodiment, a technical feature "the first signaling is associated with the G1 device groups" comprises the following meaning: the first signaling comprises at least G1 bits, and the G1 bits are respectively used by user equipment in the G1 device groups to determine whether to monitor an associated paging occasion.

As one embodiment, a technical feature "the first signaling is associated with the G1 device groups" comprises the following meaning: the first signaling is used to determine whether a device in each of the G1 device groups monitors an associated paging occasion.

As one embodiment, a technical feature "the first signaling is associated with the G1 device groups" comprises the following meaning: target user equipment is user equipment comprised in one of the G1 device groups, the first signaling comprises at least G1 bits, and the G1 bits correspond to the G1 device groups, respectively; and if a bit value corresponding to a device group to which the target user equipment belongs is equal to "1", the target user equipment monitors an associated paging occasion; otherwise, the target user equipment is not required to monitor an associated paging occasion.

As one embodiment, the first signaling comprises at least G1 bits, and the G1 bits correspond to the G1 device groups, respectively. An index of any one of the G1 device groups and an index of an associated paging occasion are used together to determine a position of a corresponding bit.

As one embodiment, the second device group is completely the same as the first device group.

As one embodiment, the second device group is different from the first device group.

As one embodiment, the second device group and the first device group comprise completely the same user equipment.

As one embodiment, user equipment comprised in the second device group is not completely the same as user equipment comprised in the first device group.

As one embodiment, one piece of user equipment only belongs to one of the second device group or the first device group.

As one embodiment, the second device group comprises all user equipment in the first device group.

As one embodiment, the first device group comprises all user equipment in the second device group.

As one embodiment, the second device group is a subset of the first device group.

As one embodiment, the first device group is a subset of the second device group.

As one embodiment, the second device group only comprises the monitor of the target wake-up signal.

As one embodiment, the second device group also comprises user equipment other than the monitor of the target wake-up signal.

As one embodiment, the instruction value of the second device group is a bit value of a bit that corresponds to the second device group and that is included in the first signaling.

As one embodiment, the instruction value of the second device group is a bit value of a bit that is for the second device group and that is included in the first signaling.

As one embodiment, the instruction value of the second device group is a bit value of a bit that is for the second device group and that is included in a DCI format carried by the first signaling.

As one embodiment, the instruction value of the second device group is a value of a paging instruction that is used for the second device group and that is included in the first signaling.

As one embodiment, a technical feature "the instruction value that is of the second device group and that is carried by the first signaling is used to determine whether to monitor the second signaling" includes the following meaning: the instruction value that is of the second device group and that is carried by the first signaling is used by the first node device in the present application to determine whether to monitor the second signaling.

As one embodiment, a technical feature "the instruction value that is of the second device group and that is carried by the first signaling is used to determine whether to monitor the second signaling" includes the following meaning: if the instruction value that is of the second device group and that is carried by the first signaling is equal to a predefined value, the monitor of the target wake-up signal monitors the second signaling; otherwise, the monitor of the target wake-up signal is not required to monitor the second signaling.

As one embodiment, a technical feature "the instruction value that is of the second device group and that is carried by the first signaling is used to determine whether to monitor the second signaling" includes the following meaning:

if the instruction value that is of the second device group and that is carried by the first signaling is equal to "1", the monitor of the target wake-up signal monitors the second signaling; otherwise, the monitor of the target wake-up signal is not required to monitor the second signaling.

As one embodiment, a technical feature "the instruction value that is of the second device group and that is carried by the first signaling is used to determine whether to monitor the second signaling" includes the following meaning: if the instruction value that is of the second device group and that is carried by the first signaling is equal to "1", whether the monitor of the target wake-up signal monitors the second signaling depends on at least one of the target wake-up signal or the first information block; otherwise, the monitor of the target wake-up signal is not required to monitor the second signaling.

As one embodiment, a technical feature "the instruction value that is of the second device group and that is carried by the first signaling is used to determine whether to monitor the second signaling" includes the following meaning: if the instruction value that is of the second device group and that is carried by the first signaling is equal to "1", the monitor of the target wake-up signal monitors the second signaling; otherwise, whether the monitor of the target wake-up signal monitors the second signaling depends on at least one of the target wake-up signal or the first information block.

As one embodiment, a technical feature "the instruction value that is of the second device group and that is carried by the first signaling is used to determine whether to monitor the second signaling" includes the following meaning: if the target wake-up signal carries an instruction for the first device group and the instruction value that is of the second device group and that is carried by the first signaling is equal to "1", the monitor of the target wake-up signal monitors the second signaling; otherwise, the monitor of the target wake-up signal is not required to monitor the second signaling.

**Embodiment 9**

Embodiment 9 illustrates a schematic diagram of a target configuration set according to one embodiment of the present application, as shown in FIG. 9. In FIG. 9, each rectangular box represents one of X1 configuration sets, and a rectangular box filled with intersection lines represents the target configuration set.

In Embodiment 9, the first information block in the present application is used to determine the X1 configuration sets, any one of the X1 configuration sets comprises at least 1 configuration parameter value, and the X1 is a positive integer greater than 1; the target configuration set is one of the X1 configuration sets, and the target configuration set comprises at least 1 configuration parameter value of the target wake-up signal in the present application; and an identity of the first device group in the present application is used to determine the target configuration set from the X1 configuration sets.

As one embodiment, the X1 is equal to 2.

As one embodiment, the X1 is greater than 2.

As one embodiment, an upper limit value of the X1 is fixed.

As one embodiment, any one of the X1 configuration sets only comprises one configuration parameter value.

As one embodiment, any one of the X1 configuration sets comprises a plurality of configuration parameter values.

As one embodiment, any one of the X1 configuration sets is a value (or state) of one IE (information element).

As one embodiment, any one of the X1 configuration sets is a combination of values of a plurality of fields.

As one embodiment, any one of the X1 configuration sets is a combination of values of at least 1 field.

As one embodiment, any one of the X1 configuration sets is one value (or state) of one wake-up signal configuration IE.

As one embodiment, any one of the X1 configuration sets is composed of values of all fields comprised in one IE.

As one embodiment, any one configuration parameter value comprised in any one of the X1 configuration sets is a value of one field.

As one embodiment, the X1 configuration sets constitute one wake-up signal configuration list.

As one embodiment, any one of the X1 configuration sets is an element comprised in one list.

As one embodiment, any two of the X1 configuration sets are two configurations of the same IE.

As one embodiment, any two of the X1 configuration sets are respectively composed of values of fields of two respective configurations of the same IE.

As one embodiment, any two of the X1 configuration sets are respective values (or states) of two same IEs.

As one embodiment, any two of the X1 configuration sets are respective configurations of two same IEs.

As one embodiment, any two of the X1 configuration sets are respectively composed of values of fields respectively configured by two same IEs.

As one embodiment, any two of the X1 configuration sets respectively comprise values of fields of two configurations of the same IE.

As one embodiment, any two of the X1 configuration sets respectively comprise values of fields of two configurations of the same IE.

As one embodiment, any two of the X1 configuration sets are respectively composed of values of two respective configurations of a combination of the same field.

As one embodiment, configuration parameter values respectively comprised in any two of the X1 configuration sets are independently configured.

As one embodiment, any one of the X1 configuration sets is composed of a value of a field comprised in one wake-up signal configuration comprised in a wake-up signal configuration list.

As one embodiment, two of the X1 configuration sets respectively are values (or states) of two different IEs.

As one embodiment, two of the X1 configuration sets respectively are respective configurations of two different IEs.

As one embodiment, two of the X1 configuration sets respectively comprise respective values of different fields.

As one embodiment, at least one of the X1 configuration sets comprises a value of a field used to configure a frequency domain resource of a wake-up signal.

As one embodiment, at least one of the X1 configuration sets comprises a value of a field used to configure a time domain resource of a wake-up signal.

As one embodiment, at least one of the X1 configuration sets comprises a value of a field used to configure a sequence resource used by a wake-up signal.

As one embodiment, at least one of the X1 configuration sets comprises a value of a field used to configure a number of information bits carried by a wake-up signal.

As one embodiment, at least one of the X1 configuration sets comprises a value of a field used to configure a format used by a wake-up signal.

As one embodiment, at least one of the X1 configuration sets includes a value of a field used to configure whether a wake-up signal is used to instruct the monitoring of a PEI (Paging Early Indication).

As one embodiment, at least one of the X1 configuration sets includes a value of a field used to configure whether a wake-up signal is used to instruct the monitoring of a PDCCH with a PS-RNTI-scrambled CRC.

As one embodiment, at least one of the X1 configuration sets comprises a value of a field used to configure a generation manner of a wake-up signal.

As one embodiment, at least one of the X1 configuration sets comprises a value of a field used to configure a type of a wake-up signal.

As one embodiment, at least one of the X1 configuration sets comprises a value of a field used to configure a modulation manner (OOK or FSK) of a wake-up signal.

As one embodiment, a technical feature "the first information block is used to determine X1 configuration sets" comprises the following meaning: the first information block is used by the first node device in the present application to determine the X1 configuration sets.

As one embodiment, a technical feature "the first information block is used to determine X1 configuration sets" includes the following meaning: all or part of the first information block is used to explicitly or implicitly instruct the X1 configuration sets.

As one embodiment, a technical feature "the first information block is used to determine X1 configuration sets" includes the following meaning: all or part of the first information block is used to explicitly or implicitly instruct one of the X1 configuration sets.

As one embodiment, a technical feature "the first information block is used to determine X1 configuration sets" includes the following meaning: all or part of the first information block is used to explicitly or implicitly instruct part of the X1 configuration sets, and at least 1 of the X1 configuration sets is a default configuration set.

As one embodiment, a technical feature "the first information block is used to determine X1 configuration sets" comprises the following meaning: the X1 configuration sets belong to one configuration set list, and the first information block is used to add a configuration set to the configuration set list, or the first information block is used to release a configuration set from the configuration set list.

As one embodiment, a technical feature "the first information block is used to determine X1 configuration sets" comprises the following meaning: the first information block is used to add a configuration set to a configuration set list to which the X1 configuration sets belong, or the first information block is used to release a configuration set from a configuration set list to which the X1 configuration sets belong.

As one embodiment, the target configuration set is any one of the X1 configuration sets.

As one embodiment, any one configuration parameter value comprised in the target configuration set is used to configure the target wake-up signal.

As one embodiment, any one configuration parameter value comprised in the target configuration set is a configuration parameter value of the target wake-up signal.

As one embodiment, any one configuration parameter value comprised in the target configuration set is a value of one field in the target configuration set.

As one embodiment, the target configuration set only comprises 1 configuration parameter value of the target wake-up signal.

As one embodiment, the target configuration set comprises a plurality of configuration parameter values of the target wake-up signal.

As one embodiment, any one configuration parameter value comprised in the target configuration set is used to monitor the target wake-up signal.

As one embodiment, the target configuration set also comprises a configuration parameter value of a signal other than the target wake-up signal.

As one embodiment, "an identity of the first device group" and "an index of the first device group" are equivalent or can be used interchangeably.

As one embodiment, "an identity of the first device group" and "a configuration index of the first node device assigned by a core network" are equivalent or can be used interchangeably.

As one embodiment, "an identity of the first device group" and "a subgroup index of the first node device assigned by a core network" are equivalent or can be used interchangeably.

As one embodiment, an identity of the first device group is a non-negative integer.

As one embodiment, an identity of the first device group is assigned by a core network.

As one embodiment, an identity of the first device group is an identity or index of the target configuration set in the X1 configuration sets.

As one embodiment, a feature identification value is equal to an identity or index value of the target configuration set in the X1 configuration sets, each piece of user equipment included in the first device group is assigned the feature identification value, and an identity of the first device group is equal to the feature identification value.

As one embodiment, an identity of the first device group is equal to equal identification values respectively assigned to all user equipment included in the first device group.

As one embodiment, each piece of user equipment included in the first equipment group is assigned an equal identification value, and an identity of the first device group is equal to an equal identification value assigned to any piece of user equipment included in the first equipment group.

As one embodiment, an identity of the first device group is obtained according to an identity of user equipment included in the first device group.

As one embodiment, an identity of the first device group is signaling-configured or predefined.

As one embodiment, an identity of the first device group is equal to an equal value obtained by performing the same mathematical operation on identities of all included user equipment.

As one embodiment, an identity of the first device group is an index of the first device group in a plurality of device groups.

As one embodiment, a technical feature "the identity of the first device group is used to determine the target configuration set from the X1 configuration sets" includes the following meaning: the identity of the first device group is used by the first node device in the present application to determine the target configuration set from the X1 configuration sets.

As one embodiment, a technical feature "the identity of the first device group is used to determine the target configuration set from the X1 configuration sets" includes the following meaning: a value obtained by performing modulo on the X1 by the identity of the first device group is used to determine the target configuration set from the X1 configuration sets.

As one embodiment, a technical feature "the identity of the first device group is used to determine the target configuration set from the X1 configuration sets" includes the following meaning: an index or identity of the target configuration set in the X1 configuration sets is equal to a value obtained by performing modulo on the X1 by the identity of the first device group.

As one embodiment, a technical feature "the identity of the first device group is used to determine the target configuration set from the X1 configuration sets" includes the following meaning: the identity of the first device group is used to determine a first intermediate value, and a value obtained by performing modulo on the X1 by the first intermediate value is used to determine the target configuration set from the X1 configuration sets.

As one embodiment, a technical feature "the identity of the first device group is used to determine the target configuration set from the X1 configuration sets" includes the following meaning: the identity of the first device group is used to determine the target configuration set from the X1 configuration sets according to a predefined mapping relationship or table relationship.

As one embodiment, a technical feature "the identity of the first device group is used to determine the target configuration set from the X1 configuration sets" includes the following meaning: an index of the target configuration set in the X1 configuration sets is equal to a configuration set index assigned to the first node by a core network.

As one embodiment, a technical feature "the identity of the first device group is used to determine the target configuration set from the X1 configuration sets" includes the following meaning: an index of the target configuration set in the X1 configuration sets is equal to an index of a subgroup assigned to the first node by a core network.

As one embodiment, a technical feature "the identity of the first device group is used to determine the target configuration set from the X1 configuration sets" includes the following meaning: an index of the target configuration set in the X1 configuration sets is equal to the identity of the first device group.

As one embodiment, a technical feature "the identity of the first device group is used to determine the target configuration set from the X1 configuration sets" includes the following meaning: the identity of the first device group is a configuration index assigned to the first node by a core network, and an index of the target configuration set in the X1 configuration sets is equal to the configuration index assigned to the first node by the core network.

As one embodiment, a technical feature "the identity of the first device group is used to determine the target configuration set from the X1 configuration sets" includes the following meaning: when the first node device supports a core network to assign a configuration index (or identity), an index of the target configuration set in the X1 configuration sets is equal to the configuration index (or identity) assigned to the first node device by the core network; otherwise, the target configuration set is one predefined or fixed configuration set in the X1 configuration sets.

As one embodiment, a technical feature "the identity of the first device group is used to determine the target configuration set from the X1 configuration sets" includes the following meaning: when the first node device supports a core network to assign a device group (or subgroup) identity (or index), a device group (or subgroup) identity (or index) assigned to the first node device by the core network is used to determine the target configuration set from the X1 configuration sets; otherwise, the target configuration set is one predefined or fixed configuration set in the X1 configuration sets.

As one embodiment, a technical feature "the identity of the first device group is used to determine the target configuration set from the X1 configuration sets" includes the following meaning: when the first node device supports a core network to assign a device group (or subgroup) identity (or index), a value obtained by performing modulo on the X1 by the device group (or subgroup) identity (or index) assigned to the first node device by the core network is used to determine the target configuration set from the X1 configuration sets; otherwise, the target configuration set is one predefined or fixed configuration set in the X1 configuration sets.

As one embodiment, a technical feature "the identity of the first device group is used to determine the target configuration set from the X1 configuration sets" includes the following meaning: the identity of the first device group is used to determine an occasion occupied by the second signaling, and the occasion occupied by the second signaling is used to determine the target configuration set from the X1 configuration sets.

**Embodiment 10**

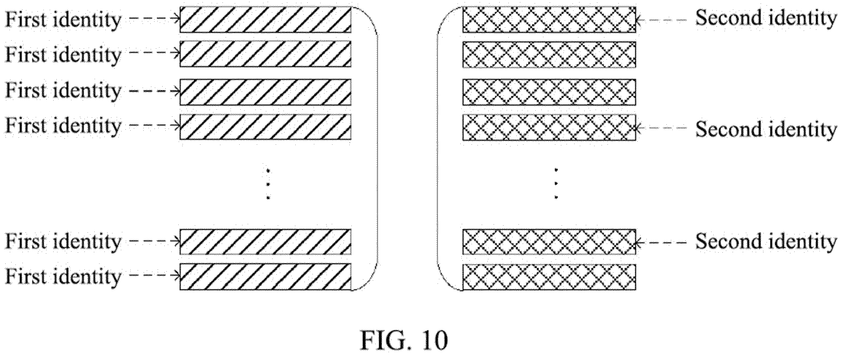

Embodiment 10 illustrates a schematic diagram of a first identity and a second identity device according to one embodiment of the present application, as shown in FIG. 10. In FIG. 10, each rectangle filled with slash lines represents one piece of user equipment included in a device group corresponding to the first identity, each rectangle filled with intersection lines represents one piece of user equipment included in a device group corresponding to the second identity, and a dotted line with an arrow represents that a corresponding identity is assigned.

In Embodiment 10, the first device group in the present application is one of X2 device groups, X2 identities correspond to the X2 device groups respectively, any one of the X2 device groups includes at least 1 user equipment, and the X2 is a positive integer greater than 1; and a first identity and a second identity are two different identities in the X2 identities, respectively, one piece of user equipment included in a device group corresponding to the first identity in the X2 device groups is assigned the first identity, and one piece of user equipment included in a device group corresponding to the second identity in the X2 device groups is not assigned an identity or is assigned the second identity.

As one embodiment, a fallback or default device group is introduced to provide support for user equipment with different capabilities, thereby ensuring the compatibility of a system.

As one embodiment, the X2 is equal to the X1 in the present application.

As one embodiment, the X2 is greater than the X1 in the present application.

As one embodiment, the X2 is smaller than the X1 in the present application.

As one embodiment, the X2 is equal to the G1 in the present application, and the X2 device groups are the G1 device groups in the present application.

As one embodiment, the X2 is equal to the G1 in the present application, and the X2 device groups are completely the same as the G1 device groups in the present application.

As one embodiment, the X2 is equal to the G1 in the present application, and the X2 device groups and the G1 device groups in the present application are equivalent or can be used interchangeably.

As one embodiment, the X2 device groups are different from the G1 device groups in the present application.

As one embodiment, the X2 is equal to the G1 in the present application, and one of the X2 device groups is not a device group in the G1 device group in the present application.

As one embodiment, the X2 is equal to the G1 in the present application, and one of the G1 device groups is not a device group in the X2 device groups.

As one embodiment, the X2 is not equal to the G1 in the present application.

As one embodiment, the X2 is equal to the G1 in the present application.

As one embodiment, the X2 is greater than the G1 in the present application, and any one of the G1 device groups in the present application is one of the X2 device groups.

As one embodiment, the X2 is smaller than the G1 in the present application, and any one of the X2 device groups is one of the G1 device groups in the present application.

As one embodiment, the X2 device groups and the G1 device groups are configured independently and respectively.

As one embodiment, the X2 device groups and the G1 device groups are configured by two signalings or two fields or two IEs, respectively.

As one embodiment, the X2 is equal to 2.

As one embodiment, the X2 is greater than 2.

As one embodiment, the X2 is configurable or predefined.

As one embodiment, the X2 device groups are configurable or predefined.

As one embodiment, the first information block is used to determine the X2 device groups.

As one embodiment, an information block other than the first information block is used to determine the X2 device groups.

As one embodiment, any one of the X2 device groups is a subgroup.

As one embodiment, any one of the X2 device groups is a subgroup configured by IE "subgroupConfig".

As one embodiment, any one of the X2 device groups is a PEI subgroup.

As one embodiment, one of the X2 device groups is a subgroup assigned by a core network.

As one embodiment, any one of the X2 device groups is a subgroup divided based on UE_ID.

As one embodiment, one of the X2 device groups is a subgroup divided based on UE_ID, and another of the X2 device groups is a subgroup assigned by a core network.

As one embodiment, any two of the X2 device groups are different.

As one embodiment, two of the X2 device groups are the same.

As one embodiment, at least one of the X2 device groups is a subgroup assigned by a core network, and one of the X2 device groups is composed of user equipment that does not support core network assignment.

As one embodiment, any one of the X2 device groups only comprises one piece of user equipment.

As one embodiment, at least one of the X2 device groups comprises a plurality of user equipment.

As one embodiment, the first device group is one of the X2 device groups.

As one embodiment, any one of the X2 identities is a non-negative integer.

As one embodiment, any one of the X2 identities is an integer.

As one embodiment, a technical feature "the X2 identities correspond to the X2 device groups respectively" includes the following meaning: the X2 identities are used to identify the X2 device groups respectively.

As one embodiment, a technical feature "the X2 identities correspond to the X2 device groups respectively" includes the following meaning: the X2 identities are associated with the X2 device groups respectively.

As one embodiment, a technical feature "the X2 identities correspond to the X2 device groups respectively" includes the following meaning: the X2 identities are used for the X2 device groups respectively.

As one embodiment, a technical feature "the X2 identities correspond to the X2 device groups respectively" includes the following meaning: the X2 identities are predefined or configured for the X2 device groups respectively.

As one embodiment, a technical feature "the X2 identities correspond to the X2 device groups respectively" includes the following meaning: the X2 identities are identities of the X2 device groups respectively.

As one embodiment, a technical feature "the X2 identities correspond to the X2 device groups respectively" includes the following meaning: the X2 identities are assigned, or configured, or default for the X2 device groups respectively.

As one embodiment, a technical feature "the X2 identities correspond to the X2 device groups respectively" includes the following meaning: the X2 identities are identities or indexes of configuration sets for the X2 device groups respectively.

As one embodiment, one of the X2 identities is assigned to a corresponding device group by a core network.

As one embodiment, one of the X2 identities is equal to a default value.

As one embodiment, one of the X2 identities is equal to a default value when a corresponding device group is not assigned or configured.

As one embodiment, any one of the X2 identities is equal to an identity or index of one of the X1 configuration sets in the present application.

As one embodiment, any one of the X2 identities is equal to one identity or index of a subgroup.

As one embodiment, any one of the X2 identities is equal to one identity or index of a subgroup configured by an IE "subgroupConfig".

As one embodiment, any one of the X2 identities is equal to one identity or index of a PEI subgroup.

As one embodiment, the X2 are equal to the X1 in the present application, the X2 identities are in a one-to-one correspondence with the X1 configuration sets in the present application, and the target configuration set is a configuration set corresponding to the identity of the first device group in the X1 configuration sets. As one dependent embodiment of the above embodiments, the one-to-one correspondence between the X2 identities and the X1 configuration sets is predefined or configurable.

As one embodiment, the X2 is greater than the X1 in the present application, and an index of the target configuration set in the X1 configuration sets in the present application is equal to a value obtained by performing modulo on the X1 by the identity of the first device group.

As one embodiment, the X2 is greater than the X1 in the present application, the X2 device groups are divided into X1 device sets, the X1 device sets are in a one-to-one correspondence with the X1 configuration sets in the present application, and the target configuration set is a configuration set corresponding to a device set to which the first device group belongs in the X1 configuration sets. As one dependent embodiment of the above embodiments, the one-to-one correspondence between the X1 device sets and the X1 configuration sets is predefined or configurable.

As one embodiment, the X2 is smaller than the X1 in the present application, and any one of the X2 device groups corresponds to at least one of the X1 configuration sets in the present application; and when the first device group corresponds to a plurality of configurations in the X1 configuration sets, a time domain position of the second signaling is used to determine the target configuration set from a plurality of corresponding configuration sets.

As one embodiment, the first identity is not equal to the second identity.

As one embodiment, the first identity and the second identity are independent.

As one embodiment, the first identity is one of the X2 identities, and the second identity is one of the X2 identities.

As one embodiment, each piece of user equipment included in a device group corresponding to the first identity in the X2 device groups is assigned the first identity.

As one embodiment, each piece of user equipment included in a device group corresponding to the first identity in the X2 device groups is assigned the first identity by a core network.

As one embodiment, each piece of user equipment included in a device group corresponding to the first identity in the X2 device groups is assigned the first identity by a network device.

As one embodiment, an identity or index assigned by a core network to each piece of user equipment included in a device group corresponding to the first identity in the X2 device groups is equal to the first identity.

As one embodiment, a piece of user equipment included in a device group corresponding to the first identity in the X2 device groups is assigned the first identity by a core network.

As one embodiment, a device group corresponding to the first identity in the X2 device groups only includes a piece of user equipment.

As one embodiment, a device group corresponding to the first identity in the X2 device groups includes a plurality of user equipment.

As one embodiment, a device group corresponding to the first identity in the X2 device groups is the first device group.

As one embodiment, a device group corresponding to the first identity in the X2 device groups is a device group other than the first device group.

As one embodiment, "a piece of user equipment is not assigned an identity" includes the following meaning: the user equipment does not support being assigned the identity, or the user equipment supports being assigned the identity but is not assigned the identity.

As one embodiment, a piece of user equipment included in a device group corresponding to the second identity in the X2 device groups does not support being assigned an identity.

As one embodiment, a piece of user equipment included in a device group corresponding to the second identity in the X2 device groups is not assigned an identity.

As one embodiment, a piece of user equipment included in a device group corresponding to the second identity in the X2 device groups is assigned the second identity.

As one embodiment, each piece of user equipment included in a device group corresponding to the second identity in the X2 device groups is assigned the second identity.

As one embodiment, a piece of user equipment included in a device group corresponding to the second identity in the X2 device groups is not assigned an identity, and another piece of user equipment included in the device group corresponding to the second identity in the X2 device groups is assigned the second identity.

As one embodiment, any piece of user equipment included in a device group corresponding to the second identity in the X2 device groups does not support being assigned an identity or is not assigned an identity or is assigned the second identity.

As one embodiment, any piece of user equipment included in a device group corresponding to the second identity in the X2 device groups does not support being assigned an identity by a core network or is not assigned an identity by a core network or is assigned the second identity by a core network.

As one embodiment, any piece of user equipment included in a device group corresponding to the second identity in the X2 device groups does not support being assigned an identity by a network device or is not assigned an identity by a network device or is assigned the second identity by a network device.

As one embodiment, a device group corresponding to the second identity in the X2 device groups is a fallback device group.

As one embodiment, a device group corresponding to the second identity in the X2 device groups is a default device group.

As one embodiment, a device group corresponding to the second identity in the X2 device groups only includes a piece of user equipment.

As one embodiment, a device group corresponding to the second identity in the X2 device groups includes a plurality of user equipment.

As one embodiment, a device group corresponding to the second identity in the X2 device groups is the first device group.

As one embodiment, a device group corresponding to the second identity in the X2 device groups is a device group other than the first device group.

As one embodiment, there is a third identity in the X2 identities, the third identity is different from the first identity, the third identity is different from the second identity, and each piece of user equipment included in a device group corresponding to the third identity in the X2 device groups does not support being assigned an identity.

As one embodiment, there is a third identity in the X2 identities, the third identity is different from the first identity, the third identity is different from the second identity, and each piece of user equipment included in a device group corresponding to the third identity in the X2 device groups is not assigned an identity.

**Embodiment 11**

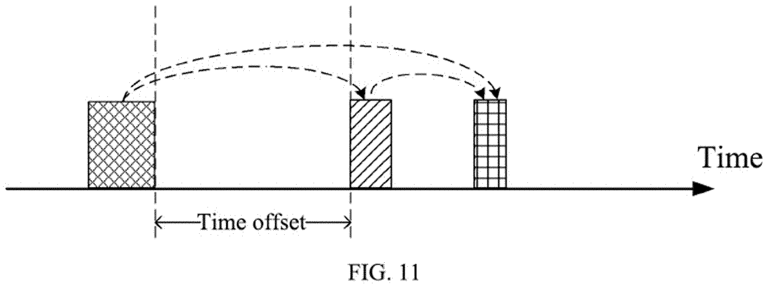

Embodiment 11 illustrates a schematic diagram of relationships among a target wake-up signal, a first signaling, and a second signaling according to one embodiment of the present application, as shown in FIG. 11. In FIG. 11, a horizontal axis represents time, a rectangular box filled with intersection lines represents the target wake-up signal, a rectangular box filled with slash lines represents the first signaling, a rectangular box filled with cross lines represents the second signaling, and a dotted line with an arrow represents a corresponding relationship.

In Embodiment 11, the first information block in the present application is used to determine a time domain position offset between the first signaling in the present application and the second signaling in the present application, and the first information block is used to determine a time domain position offset between the target wake-up signal and the second signaling in the present application; and a time domain position relationship between the target wake-up signal and the first signaling is used to determine whether to monitor the first signaling, and an identity of the monitor of the target wake-up signal is used to determine a time domain position of the second signaling.

As one embodiment, a time domain position relationship between the target wake-up signal and the first signaling is used to determine whether to monitor the first signaling, which takes into account a processing delay of the wake-up signal and ensures the implementation flexibility of a product.

As one embodiment, the time domain position offset between the first signaling and the second signaling is a position offset between a time domain occasion occupied by the first signaling and a time domain occasion occupied by the second signaling.

As one embodiment, the time domain position offset between the first signaling and the second signaling is a position offset between a time domain occasion occupied by the first signaling and a frame associated with or belonging to the second signaling.

As one embodiment, the time domain position offset between the first signaling and the second signaling is a time interval length between starting moment (or ending moment) of the first signaling and starting moment (or ending moment) of the second signaling.

As one embodiment, the time domain position offset between the first signaling and the second signaling is a time interval length between starting moment of the first signaling and starting moment of a frame associated with or belonging to the second signaling in a time domain.

As one embodiment, the time domain position offset between the first signaling and the second signaling is a time interval length between starting moment of a frame associated with or comprising the first signaling and starting moment of a frame associated with or belonging to the second signaling in a time domain.

As one embodiment, a technical feature "the first information block is used to determine the time domain position offset between the first signaling and the second signaling" comprises the following meaning: the first information block is used by the first node device in the present application to determine the time domain position offset between the first signaling and the second signaling.

As one embodiment, a technical feature "the first information block is used to determine the time domain position offset between the first signaling and the second signaling" includes the following meaning: all or part of the first information block is used to explicitly or implicitly instruct the time domain position offset between the first signaling and the second signaling.

As one embodiment, a technical feature "the first information block is used to determine the time domain position offset between the first signaling and the second signaling" includes the following meaning: the first information block is used to explicitly or implicitly instruct a number of time domain symbols spaced between starting moment of the first signaling and starting moment of a reference frame, and the first information block is used to explicitly or implicitly instruct a number of frames spaced between the starting moment of the reference frame and starting moment of a frame associated with or belonging to the second signaling in a time domain.

As one embodiment, a technical feature "the first information block is used to determine the time domain position offset between the first signaling and the second signaling" includes the following meaning: the first information block is used to explicitly or implicitly instruct a first offset value and a second offset value, the first offset value is equal to a time interval length between starting moment of the first signaling and reference time, and the second offset value is equal to a time interval length between the reference time and starting moment of a frame associated with or belonging to the second signaling in a time domain.

As one embodiment, a technical feature "the first information block is used to determine the time domain position offset between the first signaling and the second signaling" includes the following meaning: the first information block is used to explicitly or implicitly instruct a number of time domain symbols spaced between starting moment of the first signaling and starting moment of a reference frame, and the first information block is used to explicitly or implicitly instruct a number of frames spaced between the starting moment of the reference frame and starting moment of a paging frame associated with or belonging to a paging occasion occupied by the second signaling.

As one embodiment, the time domain position offset between the target wake-up signal and the second signaling is a position offset between a time domain occasion occupied by the target wake-up signal and a time domain occasion occupied by the second signaling.

As one embodiment, the time domain position offset between the target wake-up signal and the second signaling is a position offset between a time domain occasion occupied by the target wake-up signal and a frame associated with or belonging to the second signaling.

As one embodiment, the time domain position offset between the target wake-up signal and the second signaling is a time interval length between starting moment (or ending moment) of the target wake-up signal and starting moment (or ending moment) of the second signaling.

As one embodiment, the time domain position offset between the target wake-up signal and the second signaling is a time interval length between starting moment (or ending moment) of the target wake-up signal and reference time, and the reference time and a time domain position of the second signaling.

As one embodiment, the time domain position offset between the target wake-up signal and the second signaling is a time interval length between starting moment (or ending moment) of the target wake-up signal and starting moment (or ending moment) of a frame associated with or belonging to the second signaling in a time domain.

As one embodiment, the time domain position offset between the target wake-up signal and the second signaling is a time interval length between starting moment (or ending moment) of a frame associated with or comprising the target wake-up signal and starting moment (or ending moment) of a frame associated with or belonging to the second signaling in a time domain.

As one embodiment, the time domain position offset between the target wake-up signal and the second signaling comprises a number of time domain symbols spaced between starting moment (or ending moment) of the target wake-up signal and starting moment (or ending moment) of a reference frame and a number of frames spaced between the starting moment (or ending moment) of the reference frame and starting moment (or ending moment) of a frame associated with or belonging to the second signaling in a time domain.

As one embodiment, the time domain position offset between the target wake-up signal and the second signaling comprises a number of time domain symbols spaced between starting moment (or ending moment) of the target wake-up signal and starting moment (or ending moment) of a reference subframe and a number of subframes spaced between the starting moment (or ending moment) of the reference subframe and starting moment (or ending moment) of a subframe associated with or belonging to the second signaling in a time domain.

As one embodiment, the time domain position offset between the target wake-up signal and the second signaling comprises a number of time domain symbols spaced between starting moment (or ending moment) of the target wake-up signal and starting moment (or ending moment) of a reference time slot and a number of subframes spaced between the starting moment (or ending moment) of the reference time slot and starting moment (or ending moment) of a time slot associated with or belonging to the second signaling in a time domain.

As one embodiment, the time domain position offset between the target wake-up signal and the second signaling comprises a number of time domain symbols spaced between starting moment (or ending moment) of the target wake-up signal and starting moment (or ending moment) of a reference frame and a number of frames spaced between the starting moment (or ending moment) of the reference frame and starting moment (or ending moment) of a paging frame associated with or belonging to a paging occasion occupied by the second signaling.

As one embodiment, the time domain position offset between the target wake-up signal and the second signaling comprises a time interval length between starting moment (or ending moment) of the target wake-up signal and starting moment (or ending moment) of a reference frame and a time interval length between the starting moment (or ending moment) of the reference frame and starting moment (or ending moment) of a paging frame associated with or belonging to a paging occasion occupied by the second signaling.

As one embodiment, a technical feature "the first information block is used to determine the time domain position offset between the target wake-up signal and the second signaling" comprises the following meaning: the first information block is used by the first node device in the present application to determine the time domain position offset between the target wake-up signal and the second signaling.

As one embodiment, a technical feature "the first information block is used to determine the time domain position offset between the target wake-up signal and the second signaling" includes the following meaning: all or part of the first information block is used to explicitly or implicitly instruct the time domain position offset between the target wake-up signal and the second signaling.

As one embodiment, a technical feature "the first information block is used to determine the time domain position offset between the target wake-up signal and the second signaling" comprises the following meaning: the first information block is used to determine a precedence relationship between the target wake-up signal and the second signaling.

As one embodiment, a technical feature "the first information block is used to determine the time domain position offset between the target wake-up signal and the second signaling" comprises the following meaning: the first information block is used to determine a precedence relationship between the target wake-up signal and the second signaling and a time interval length between the target wake-up signal and the second signaling.

As one embodiment, a technical feature "the first information block is used to determine the time domain position offset between the target wake-up signal and the second signaling" comprises the following meaning: the first information block is used to determine a time interval length between the target wake-up signal and the second signaling.

As one embodiment, a technical feature "the first information block is used to determine the time domain position offset between the target wake-up signal and the second signaling" comprises the following meaning: the first information block is used to determine a time interval length between starting moment (or ending moment) of a time domain resource occupied by the target wake-up signal and starting moment (or ending moment) of one time window associated with (or belonging to) the second signaling. As one dependent embodiment of the above embodiments, one time window associated with (or belonging to) the second signaling comprises at least 1 time slot. As one dependent embodiment of the above embodiments, one time window associated with (or belonging to) the second signaling comprises at least 1 frame. As one dependent embodiment of the above embodiments, one time window associated with (or belonging to) the second signaling comprises at least 1 OFDM symbol. As one dependent embodiment of the above embodiments, one time window associated with (or belonging to) the second signaling comprises at least 1 DRX cycle. As one dependent embodiment of the above embodiments, a time window associated with (or belonging to) the second signaling is one time window associated with (or belonging to) a paging occasion occupied by the second signaling.

As one embodiment, a technical feature "the first information block is used to determine the time domain position offset between the target wake-up signal and the second signaling" comprises the following meaning: the first information block is used to determine a time domain position of the target wake-up signal.

As one embodiment, a technical feature "the first information block is used to determine the time domain position offset between the target wake-up signal and the second signaling" comprises the following meaning: the first information block is used to determine starting moment or ending moment of a time domain resource occupied by the target wake-up signal.

As one embodiment, a technical feature "the first information block is used to determine the time domain position offset between the target wake-up signal and the second signaling" comprises the following meaning: the first information block is used to determine reference time and a time interval length between starting moment or ending moment of a time domain resource occupied by the target wake-up signal and the reference time. As one dependent embodiment of the above embodiments, a time domain position of the second signaling is used to determine the reference time. As one dependent embodiment of the above embodiments, one frame associated with (or belonging to) the second signaling is used to determine the reference time. As a dependent embodiment of the above embodiments, all or part of the first information block is used to explicitly or implicitly instruct a time interval length between the reference time and starting moment of a frame associated with (or belonging to) the second signaling. As one dependent embodiment of the above embodiments, one DRX cycle associated with (or belonging to) the second signaling is used to determine the reference time.

As one embodiment, the first information block is used to determine a number of device groups associated with a paging occasion to which the second signaling belongs.

As one embodiment, the first information block is also used to determine a number of paging occasions associated with the target wake-up signal.

As one embodiment, a technical feature "the time domain position relationship between the target wake-up signal and the first signaling is used to determine whether to monitor the first signaling" comprises the following meaning: the time domain position relationship between the target wake-up signal and the first signaling is used by the monitor of the target wake-up signal to determine whether to monitor the first signaling.

As one embodiment, a technical feature "the time domain position relationship between the target wake-up signal and the first signaling is used to determine whether to monitor the first signaling" comprises the following meaning: a time domain relative position relationship between the target wake-up signal and the first signaling is used to determine whether to monitor the first signaling.

As one embodiment, a technical feature "the time domain position relationship between the target wake-up signal and the first signaling is used to determine whether to monitor the first signaling" comprises the following meaning: a precedence relationship between the target wake-up signal and the first signaling in a time domain is used to determine whether to monitor the first signaling.

As one embodiment, a technical feature "the time domain position relationship between the target wake-up signal and the first signaling is used to determine whether to monitor the first signaling" comprises the following meaning: a time domain interval length between the target wake-up signal and the first signaling in a time domain is used to determine whether to monitor the first signaling.

As one embodiment, a technical feature "the time domain position relationship between the target wake-up signal and the first signaling is used to determine whether to monitor the first signaling" comprises the following meaning: a precedence relationship and a time domain interval length between the target wake-up signal and the first signaling in a time domain are used to determine whether to monitor the first signaling.

As one embodiment, a technical feature "the time domain position relationship between the target wake-up signal and the first signaling is used to determine whether to monitor the first signaling" comprises the following meaning: when the target wake-up signal is earlier than the first signaling, the first signaling is monitored; otherwise, the monitor of the target wake-up signal is not required to monitor the first signaling.

As one embodiment, a technical feature "the time domain position relationship between the target wake-up signal and the first signaling is used to determine whether to monitor the first signaling" includes the following meaning: when the target wake-up signal is earlier than the first signaling, and when the target wake-up signal is detected and the target wake-up signal carries an instruction for the first device group, at least one of the first information block or the target wake-up signal is used to determine whether to monitor the first signaling; otherwise, the monitor of the target wake-up signal is not required to monitor the first signaling.

As one embodiment, a technical feature "the time domain position relationship between the target wake-up signal and the first signaling is used to determine whether to monitor the first signaling" comprises the following meaning: when the target wake-up signal is earlier than the first signaling by at least a target threshold value, the first signaling is monitored; otherwise, the monitor of the target wake-up signal is not required to monitor the first signaling; and the target threshold value is predefined or configurable or related to a capability of the monitor of the target wake-up signal.

As one embodiment, a technical feature "the time domain position relationship between the target wake-up signal and the first signaling is used to determine whether to monitor the first signaling" includes the following meaning: when the target wake-up signal is earlier than the first signaling by at least a target threshold value, and when the target wake-up signal is detected and the target wake-up signal carries an instruction for the first device group, at least one of the first information block or the target wake-up signal is used to determine whether to monitor the first signaling; otherwise, the monitor of the target wake-up signal is not required to monitor the first signaling.

As one embodiment, a time domain position of the second signaling is an index of a time slot to which the second signaling belongs in a time domain.

As one embodiment, a time domain position of the second signaling is an index of a frame to which the second signaling belongs in a time domain.

As one embodiment, a time domain position of the second signaling is an index of a subframe to which the second signaling belongs in a time domain.

As one embodiment, a time domain position of the second signaling is an index of a DRX (discontinuous reception) cycle to which the second signaling belongs in a time domain.

As one embodiment, a time domain position of the second signaling is an order or index of an occasion occupied by the second signaling in a time domain in a plurality of occasions to which the second signaling belongs.

As one embodiment, a time domain position of the second signaling is an order or index of an occasion occupied by the second signaling in a time domain in a plurality of occasions corresponding to the same one or more DRX cycles.

As one embodiment, a time domain position of the second signaling is an order or index of an occasion occupied by the second signaling in a time domain in a plurality of occasions corresponding to the same one or more paging frames.

As one embodiment, a time domain position of the second signaling is an order or index of an occasion occupied by the second signaling in a time domain in a plurality of occasions corresponding to the same one or more time slots.

As one embodiment, a time domain position of the second signaling is an order or index of an occasion occupied by the second signaling in one time domain in a plurality of occasions corresponding to the same time window.

As one embodiment, a time domain position of the second signaling is an order or index of an occasion occupied by the second signaling in a time domain in a plurality of occasions on a network side.

As one embodiment, a time domain position of the second signaling is an order or index of an occasion occupied by the second signaling in a time domain in a plurality of occasions associated with the first node device.

As one embodiment, a time domain position of the second signaling is a time domain position of a paging occasion occupied by the second signaling in a time domain.

As one embodiment, the identity of the monitor of the target wake-up signal is a TMSI of the monitor of the target wake-up signal.

As one embodiment, the identity of the monitor of the target wake-up signal is a 5G-S-TMSI of the monitor of the target wake-up signal.

As one embodiment, the identity of the monitor of the target wake-up signal is an RNTI of the monitor of the target wake-up signal.

As one embodiment, the identity of the monitor of the target wake-up signal is an ID assigned to the monitor of the target wake-up signal.

As one embodiment, the identity of the monitor of the target wake-up signal is an IMSI (International Mobile Subscriber Identity) of the monitor of the target wake-up signal.

As one embodiment, a technical feature "the identity of the monitor of the target wake-up signal is used to determine the time domain position of the second signaling" includes the following meaning: the identity of the monitor of the target wake-up signal is used by the first node device in the present application to determine the time domain position of the second signaling.

As one embodiment, a technical feature "the identity of the monitor of the target wake-up signal is used to determine the time domain position of the second signaling" includes the following meaning: the identity of the monitor of the target wake-up signal is used to determine the time domain position of the second signaling according to a predefined operation rule.

As one embodiment, a technical feature "the identity of the monitor of the target wake-up signal is used to determine the time domain position of the second signaling" includes the following meaning: the identity of the monitor of the target wake-up signal is used to determine a paging occasion (PO) associated with (or occupied by) the second signaling.

As one embodiment, a technical feature "the identity of the monitor of the target wake-up signal is used to determine the time domain position of the second signaling" includes the following meaning: the identity of the monitor of the target wake-up signal is used to determine a paging frame (PF) associated with (or belonging to) the second signaling in a time domain.

As one embodiment, a technical feature "the identity of the monitor of the target wake-up signal is used to determine the time domain position of the second signaling" includes the following meaning: the identity of the monitor of the target wake-up signal is used to determine a paging occasion (PO) associated with (or occupied by) the second signaling in a time domain, and the paging occasion associated with (or occupied by) the second signaling in the time domain and a configurable or predefined time domain offset are used together to determine the time domain position of the second signaling.

As one embodiment, a technical feature "the identity of the monitor of the target wake-up signal is used to determine the time domain position of the second signaling" includes meeting the following formula relationship:

$$(SFN + PF\_offset) \bmod T = (T \operatorname{div} N) * (UE\_ID \bmod N)$$

where SFN represents a PF including the second signaling or a starting point of the second signaling in a time domain, UE_ID represents the identity of the monitor of the target wake-up signal, T represents a DRX cycle, N represents a number of PFs in the DRX cycle, and PF_offset represents a predefined or configured offset value.

As one embodiment, a technical feature "the identity of the monitor of the target wake-up signal is used to determine the time domain position of the second signaling" includes meeting the following formula relationship:

$$i\_s = \operatorname{floor}(UE\_ID/N) \bmod Ns$$

where i_s represents an index of an occasion associated with (or occupied by) the second signaling in a time domain, UE_ID represents the identity of the monitor of the target wake-up signal, N represents a number of PFs in a DRX cycle, and Ns is a number of POs for one PF.

As one embodiment, a technical feature "the identity of the monitor of the target wake-up signal is used to determine the time domain position of the second signaling" includes the following meaning: the second signaling is transmitted through a PDCCH, and the identity of the monitor of the target wake-up signal is used to determine an index and/or a type of a search space set to which the second signaling belongs.

## Embodiment 12

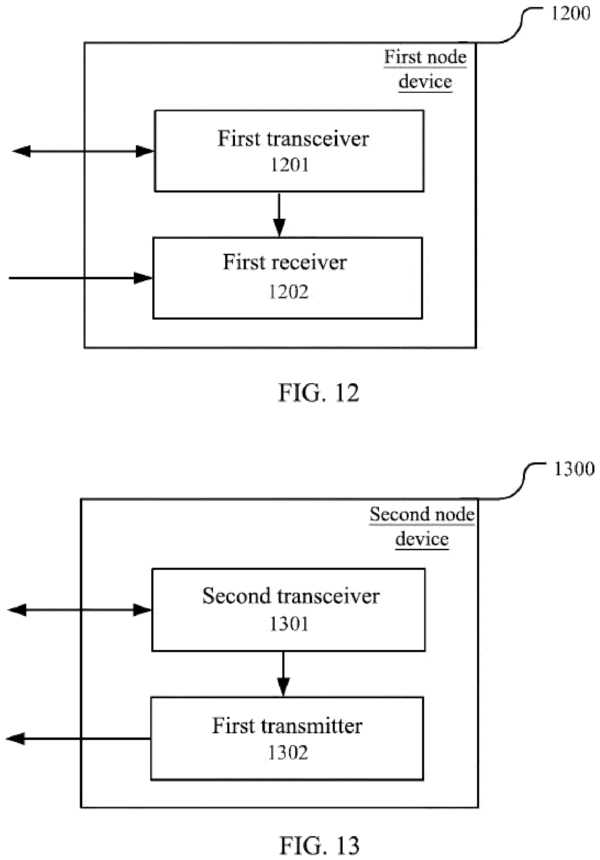

Embodiment 12 illustrates a structural block diagram of a processing apparatus in a first node device according to one embodiment, as shown in FIG. 12. In FIG. 12, the processing apparatus 1200 in the first node device comprises a first transceiver 1201 and a first receiver 1202. The first transceiver 1201 comprises a transmitting device/receiving device 456 (comprising an antenna 460), a receiving processor 452, a transmitting processor 455, and a controller/processor 490 in FIG. 4 of the present application. The first receiver 1202 comprises the transmitting device/receiving device 456 (comprising the antenna 460), the receiving processor 452, and the controller/processor 490 in FIG. 4 of the present application.

In Embodiment 12, the first transceiver 1201 receives a first information block and monitors a target wake-up signal, and the first information block is used to determine at least 1 configuration parameter value of the target wake-up signal; and the first receiver 1202 determines whether to monitor a first signaling and whether to monitor a second signaling, wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling.

As one embodiment, the target wake-up signal is not detected; and the monitor of the target wake-up signal monitors the first signaling and the first signaling is used to determine whether to monitor the second signaling, or the monitor of the target wake-up signal abandons monitoring the second signaling.

As one embodiment, the first signaling is associated with G1 device groups, and the G1 is a positive integer greater than 1; a second device group is one of the G1 device groups, and the monitor of the target wake-up signal belongs to the second device group; and an instruction value of the second device group carried by the first signaling is used to determine whether to monitor the second signaling.

As one embodiment, the first information block is used to determine X1 configuration sets, any one of the X1 configuration sets comprises at least 1 configuration parameter value, and the X1 is a positive integer greater than 1; a target configuration set is one of the X1 configuration sets, and the target configuration set comprises at least 1 configuration parameter value of the target wake-up signal; and an identity of the first device group is used to determine the target configuration set from the X1 configuration sets.

As one embodiment, the first transceiver 1201 sends a second information block, wherein the second information block is used to instruct at least 1 band, and the monitor of the target wake-up signal supports a reception of a wake-up signal on each band instructed by the second information block.

As one embodiment, the first device group is one of X2 device groups, X2 identities correspond to the X2 device groups respectively, any one of the X2 device groups includes at least 1 user equipment, and the X2 is a positive integer greater than 1; and a first identity and a second identity are two different identities in the X2 identities, respectively, one piece of user equipment included in a device group corresponding to the first identity in the X2 device groups is assigned the first identity, and one piece of user equipment included in a device group corresponding to the second identity in the X2 device groups is not assigned an identity or is assigned the second identity.

As one embodiment, the first information block is used to determine a time domain position offset between the first signaling and the second signaling, and the first information block is used to determine a time domain position offset between the target wake-up signal and the second signaling; and a time domain position relationship between the target wake-up signal and the first signaling is used to determine whether to monitor the first signaling, and an identity of the monitor of the target wake-up signal is used to determine a time domain position of the second signaling.

## Embodiment 13

Embodiment 13 illustrates a structural block diagram of a processing apparatus in a second node device according to one embodiment, as shown in FIG. 13. In FIG. 13, the processing apparatus 1300 in the second node device comprises a second transceiver 1301 and a first transmitter 1302. The second transceiver 1301 comprises a transmitting device/receiving device 416 (comprising an antenna 460), a receiving processor 412, a transmitting processor 415, and a controller/processor 440 in FIG. 4 of the present application. The first transmitter 1302 comprises the transmitting device/receiving device 416 (comprising the antenna 460), the transmitting processor 415, and the controller/processor 440 in FIG. 4 of the present application.

In Embodiment 13, the second transceiver 1301 sends a first information block and sends a target wake-up signal, and the first information block is used to determine at least 1 configuration parameter value of the target wake-up signal; and the first transmitter 1302 sends a first signaling and sends a second signaling, wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether the first signaling is monitored, and the first signaling is used to determine whether the second signaling is monitored; and when the target wake-up signal is detected and the target wake-up signal does not carry the instruction for the first device group, the monitor of the target wake-up signal abandons monitoring the second signaling.

As one embodiment, the target wake-up signal is not detected; and the monitor of the target wake-up signal monitors the first signaling and the first signaling is used to determine whether to monitor the second signaling, or the monitor of the target wake-up signal abandons monitoring the second signaling.

As one embodiment, the first signaling is associated with G1 device groups, and the G1 is a positive integer greater than 1; a second device group is one of the G1 device groups, and the monitor of the target wake-up signal belongs to the second device group; and an instruction value of the second device group carried by the first signaling is used to determine whether to monitor the second signaling.

As one embodiment, the first information block is used to determine X1 configuration sets, any one of the X1 configuration sets comprises at least 1 configuration parameter value, and the X1 is a positive integer greater than 1; a target configuration set is one of the X1 configuration sets, and the target configuration set comprises at least 1 configuration parameter value of the target wake-up signal; and an identity of the first device group is used to determine the target configuration set from the X1 configuration sets.

As one embodiment, the second transceiver 1301 receives a second information block, wherein the second information block is used to instruct at least 1 band, and the monitor of the target wake-up signal supports a reception of a wake-up signal on each band instructed by the second information block.

As one embodiment, the first device group is one of X2 device groups, X2 identities correspond to the X2 device groups respectively, any one of the X2 device groups includes at least 1 user equipment, and the X2 is a positive integer greater than 1; and a first identity and a second identity are two different identities in the X2 identities, respectively, one piece of user equipment included in a device group corresponding to the first identity in the X2 device groups is assigned the first identity, and one piece of user equipment included in a device group corresponding to the second identity in the X2 device groups is not assigned an identity or is assigned the second identity.

As one embodiment, the first information block is used to determine a time domain position offset between the first signaling and the second signaling, and the first information block is used to determine a time domain position offset between the target wake-up signal and the second signaling; and a time domain position relationship between the target wake-up signal and the first signaling is used to determine whether to monitor the first signaling, and an identity of the monitor of the target wake-up signal is used to determine a time domain position of the second signaling.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk, etc. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. A first node device or a second node device or UE or a terminal in the present application comprises but is not limited to mobile phones, tablet computers, laptops, network cards, low-power devices, eMTC devices, NB-IoT devices, vehicular communication devices, aircrafts, airplanes, unmanned aerial vehicles, remote-controlled aircrafts, and other wireless communication devices. A base station device or a base station or a network-side device in the present application comprises but is not limited to macro cellular base stations, micro cellular base stations, home base stations, relay base stations, eNBs, gNBs, transmission and reception nodes TRP, relay satellites, satellite base stations, air base stations, and other wireless communication devices.

Those skilled in the art will appreciate that the present invention may be practiced in other designated forms without departing from its core or basic features. Therefore, the currently disclosed embodiments should be regarded as descriptive and not restrictive in any way. The scope of the invention is determined by the appended claims rather than the foregoing description, and all modifications within their equivalent meaning and area are considered to have been included therein.

## Claims

1. A first node device used in wireless communication, comprising:

a first transceiver for receiving a first information block and monitoring a target wake-up signal, wherein the first information block is used to determine at least 1 configuration parameter value of the target wake-up signal; and a first receiver for determining whether to monitor a first signaling and determining whether to monitor a second signaling,
wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling.

2. The first node device according to claim 1, wherein the target wake-up signal is not detected; and the monitor of the target wake-up signal monitors the first signaling and the first signaling is used to determine whether to monitor the second signaling, or the monitor of the target wake-up signal abandons monitoring the second signaling.

3. The first node device according to claim 1 or 2, wherein the first signaling is associated with G1 device groups, and the G1 is a positive integer greater than 1; a second device group is one of the G1 device groups, and the monitor of the target wake-up signal belongs to the second device group; and an instruction value of the second device group carried by the first signaling is used to determine whether to monitor the second signaling.

4. The first node device according to any one of claims 1 to 3, wherein the first information block is used to determine X1 configuration sets, any one of the X1 configuration sets comprises at least 1 configuration parameter value, and the X1 is a positive integer greater than 1; a target configuration set is one of the X1 configuration sets, and the target configuration set comprises at least 1 configuration parameter value of the target wake-up signal; and an identity of the first device group is used to determine the target configuration set from the X1 configuration sets.

5. The first node device according to any one of claims 1 to 4, wherein the first transceiver sends a second information block, wherein the second information block is used to instruct at least 1 band, and the monitor of the target wake-up signal supports a reception of a wake-up signal on each band instructed by the second information block.

6. The first node device according to any one of claims 1 to 5, wherein the first device group is one of X2 device groups, X2 identities correspond to the X2 device groups, respectively, any one of the X2 device groups comprises at least 1 piece of user equipment, and the X2 is a positive integer greater than 1; and a first identity and a second identity are two different identities in the X2 identities, respectively, one piece of user equipment included in a device group corresponding to the first identity in the X2 device groups is assigned the first identity, and one piece of user equipment included in a device group corresponding to the second identity in the X2 device groups is not assigned an identity or is assigned the second identity.

7. The first node device according to any one of claims 1 to 6, wherein the first information block is used to determine a time domain position offset between the first signaling and the second signaling, and the first information block is used to determine a time domain position offset between the target wake-up signal and the second signaling; and a time domain position relationship between the target wake-up signal and the first signaling is used to determine whether to monitor the first signaling, and an identity of the monitor of the target wake-up signal is used to determine a time domain position of the second signaling.

8. A second node device used in wireless communication, comprising:

a second transceiver for sending a first information block and sending a target wake-up signal, wherein the first information block is used to determine at least 1 configuration parameter value of the target wake-up signal; and a first transmitter for sending a first signaling and sending a second signaling,
wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether the first signaling is monitored, and the first signaling is used to determine whether the second signaling is monitored; and when the target wake-up signal is detected and the target wake-up signal does not carry the instruction for the first device group, the monitor of the target wake-up signal abandons monitoring the second signaling.

9. A method used in a first node for wireless communication, comprising:

receiving a first information block and monitoring a target wake-up signal, wherein the first information block is used to determine at least 1 configuration parameter value of the target wake-up signal; and
determining whether to monitor a first signaling and determining whether to monitor a second signaling, wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether to monitor the first signaling, and the first signaling is used to determine whether to monitor the second signaling; and when the target wake-up signal is detected and the target wake-up signal does not carry the instruction for the first device group, the monitor of the target wake-up signal abandons monitoring the second signaling.

10. A method used in a second node for wireless communication, comprising:

sending a first information block and sending a target wake-up signal, wherein the first information block is used to determine at least 1 configuration parameter value of the target wake-up signal; and
sending a first signaling and sending a second signaling,
wherein a monitor of the target wake-up signal belongs to a first device group, and the first device group comprises at least 1 piece of user equipment; when the target wake-up signal is detected and the target wake-up signal carries an instruction for the first device group, at least one of the first information block or the target wake-up signal is used to determine whether the first signaling is monitored, and the first signaling is used to determine whether the second signaling is monitored; and when the target wake-up signal is detected and the target wake-up signal does not carry the instruction for the first device group, the monitor of the target wake-up signal abandons monitoring the second signaling.

100

Receive a first information block and monitor a target wake-up signal ——101

Determine whether to monitor a first signaling and determine whether to monitor a second signaling ——102

FIG. 1

FIG. 2

Control plane
300

RRC — 306
PDCP — 304
RLC — 303
MAC — 302
PHY — 301

L3
L2
L1

305

User plane
350

SDAP — 356
PDCP — 354
RLC — 353
MAC — 352
PHY — 351

L2
L1

355

FIG. 3

FIG. 4

FIG. 5

```
┌─────────────────────────┐                        ┌─────────────────────────┐
│   N600. Second node     │                        │    U650. First node     │
└─────────────────────────┘                        └─────────────────────────┘
           │                                        ┌─────────────────────────┐
           │                           Second       │  S651. Send a second    │
           │                         information     │    information block    │
           │◄──────────────────────────block────────└─────────────────────────┘
┌─────────────────────────┐                                     │
│ S601. Receive the second│                                     │
│    information block     │                                     │
└─────────────────────────┘                                     │
┌─────────────────────────┐                  First              │
│ S602. Send a first information block │   information           │
└─────────────────────────┘                   block             │
           │──────────────────────────────────────────────────►│
           │                                        ┌─────────────────────────┐
           │                                        │ S652. Receive the first information block │
           │                                        └─────────────────────────┘
           │                                                     │
           │                                        ┌─────────────────────────┐
           │                                        │ S653. Monitor a target wake-up signal │
           │                                        └─────────────────────────┘
           ▼                                                     ▼
      ╭─────────╮                                          ╭─────────╮
      │   End   │                                          │   End   │
      ╰─────────╯                                          ╰─────────╯
```

FIG. 6

701 Start

702 Is a target wake-up signal detected? —No→ Abandon monitoring a second signaling 703

Yes

704 Does the target wake-up signal carry an instruction for a first device group? —No→

Yes

705 Whether to monitor a first signaling —No→ Monitor the second signaling 706

Yes

707 Whether to monitor the second signaling —Yes→

No

FIG. 7

First signaling

FIG. 8

Identity of a first
device group

FIG. 9

First identity - - -→ //////////

First identity - - -→ //////////

First identity - - -→ //////////

First identity - - -→ //////////

⋮

First identity - - -→ //////////

First identity - - -→ //////////

⤫⤫⤫⤫⤫ ←- - - Second identity

⤫⤫⤫⤫⤫

⤫⤫⤫⤫⤫

⤫⤫⤫⤫⤫ ←- - - Second identity

⋮

⤫⤫⤫⤫⤫ ←- - - Second identity

⤫⤫⤫⤫⤫

FIG. 10

FIG. 11

1200

First node
device

First transceiver
1201

First receiver
1202

FIG. 12

1300

Second node
device

Second transceiver
1301

First transmitter
1302

FIG. 13

## INTERNATIONAL SEARCH REPORT

| International application No. |
|---|
| **PCT/CN2023/138376** |

**A.    CLASSIFICATION OF SUBJECT MATTER**

H04W 52/02(2009.01)i

According to International Patent Classification (IPC) or to both national classification and IPC

**B.    FIELDS SEARCHED**

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

DWPI, ENTXT, CNTXT, CJFD, 3GPP: 检测, 监控, 唤醒, 组, 集合, 信令, 功率, 能耗, 节省, 节约, detect, monitor, wake up, group, signal, power, save

**C.    DOCUMENTS CONSIDERED TO BE RELEVANT**

| Category* | Citation of document, with indication, where appropriate, of the relevant passages | Relevant to claim No. |
|---|---|---|
| A | CN 109309555 A (SHARP CORP.) 05 February 2019 (2019-02-05) <br> description, paragraphs 0026-0132 | 1-10 |
| A | CN 113396613 A (QUALCOMM INC.) 14 September 2021 (2021-09-14) <br> entire document | 1-10 |
| A | OPPO. "Procedure of PDCCH-based wake up signalling" <br> *3GPP TSG-RAN WG2 Meeting #107 R2-1908775*, 30 August 2019 (2019-08-30), <br> entire document | 1-10 |
| A | EP 3927021 A1 (DATANG MOBILE COMMUNICATIONS EQUIPMENT CO., LTD.) 22 December 2021 (2021-12-22) <br> entire document | 1-10 |

|   | Further documents are listed in the continuation of Box C. | ☑ See patent family annex. |
|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 March 2024** | **21 March 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

EP 4 642 103 A1

<table>
<tr><th colspan="3">INTERNATIONAL SEARCH REPORT<br>Information on patent family members</th><th colspan="2">International application No.<br>**PCT/CN2023/138376**</th></tr>
</table>

| Patent document cited in search report | | | Publication date (day/month/year) | Patent family member(s) | | | Publication date (day/month/year) |
|---|---|---|---|---|---|---|---|
| CN | 109309555 | A | 05 February 2019 | EP | 3661094 | A1 | 03 June 2020 |
| | | | | ZA | 202000771 | B | 25 August 2021 |
| | | | | WO | 2019019960 | A1 | 31 January 2019 |
| | | | | US | 2021136687 | A1 | 06 May 2021 |
| | | | | TW | 201911909 | A | 16 March 2019 |
| CN | 113396613 | A | 14 September 2021 | EP | 3925315 | A1 | 22 December 2021 |
| | | | | WO | 2020168159 | A1 | 20 August 2020 |
| | | | | US | 2020267646 | A1 | 20 August 2020 |
| EP | 3927021 | A1 | 22 December 2021 | WO | 2020164389 | A1 | 20 August 2020 |
| | | | | US | 2022124625 | A1 | 21 April 2022 |
| | | | | CN | 111586804 | A | 25 August 2020 |

Form PCT/ISA/210 (patent family annex) (July 2022)